(19) Europäisches Patentamt
European Patent Office
Office européen des brevets

(11) **EP 4 325 750 A1**

(12) **EUROPEAN PATENT APPLICATION**
published in accordance with Art. 153(4) EPC

(43) Date of publication:
**21.02.2024 Bulletin 2024/08**

(21) Application number: **22828670.4**

(22) Date of filing: **16.06.2022**

(51) International Patent Classification (IPC):
**H04B 17/309** (2015.01)    **H04L 25/02** (2006.01)
**H04L 5/00** (2006.01)    **H04B 17/318** (2015.01)
**H04B 17/364** (2015.01)    **H04W 74/00** (2009.01)

(52) Cooperative Patent Classification (CPC):
**H04B 17/309; H04B 17/318; H04B 17/364;
H04L 5/00; H04L 25/02; H04W 74/00**

(86) International application number:
**PCT/KR2022/008542**

(87) International publication number:
**WO 2022/270823 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.06.2021 KR 20210080391**

(71) Applicant: **Samsung Electronics Co., Ltd.
Suwon-si, Gyeonggi-do 16677 (KR)**

(72) Inventors:
• **LEE, Jaehyun
Suwon-si, Gyeonggi-do 16677 (KR)**

• **KIM, Youngjoon
Suwon-si, Gyeonggi-do 16677 (KR)**
• **KIM, Hanjin
Suwon-si, Gyeonggi-do 16677 (KR)**
• **PARK, Seungil
Suwon-si, Gyeonggi-do 16677 (KR)**
• **PARK, Yosub
Suwon-si, Gyeonggi-do 16677 (KR)**
• **JUNG, Jungsoo
Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

(54) **METHOD AND APPARATUS FOR USING LINE-OF-SIGHT CHANNEL VIA ESTIMATION OF MULTI-BAND CHANNEL**

(57)    The present disclosure relates to a 5th generation (5G) or 6th generation (6G) communication system for supporting higher data rates after a 4th generation (4G) communication system such as long term evolution (LTE).

According to an embodiment of the present disclosure, a method of identifying, by a base station (BS), a line-of-sight (LOS) channel in a wireless communication system may include: receiving, from a user equipment (UE), a signal for measuring a channel in each of multiple bands; determining, based on the signal, whether the channel is an LOS channel in each of the multiple bands; in response to a determination that the LOS channel exists in each of the multiple bands, identifying the channel as the LOS channel; and transmitting data to the UE, based on the LOS channel.

FIG. 8

```
                    ┌─────────┐
                    │  START  │
                    └────┬────┘
                         │
   ┌─────────────────────────────────────────────┐
   │ RECEIVE, FROM BASE STATION, REFERENCE SIGNAL │── S810
   │ FOR MEASURING CHANNEL IN EACH OF MULTIPLE    │
   │ BANDS                                        │
   └─────────────────────┬────────────────────────┘
                         │
   ┌─────────────────────────────────────────────┐
   │ DETERMINE, BASED ON REFERENCE SIGNAL,        │── S820
   │ WHETHER CHANNEL IS LOS OR NLOS IN EACH       │
   │ OF MULTIPLE BANDS                            │
   └─────────────────────┬────────────────────────┘
                         │
   ┌─────────────────────────────────────────────┐
   │ WHEN CHANNEL IS DETERMINED AS LOS IN EACH OF │── S830
   │ MULTIPLE BANDS, IDENTIFY CHANNEL AS LOS      │
   │ CHANNEL                                      │
   └─────────────────────┬────────────────────────┘
                         │
   ┌─────────────────────────────────────────────┐
   │ TRANSMIT AT LEAST ONE OF LOCATION INFORMATION│── S840
   │ OF USER EQUIPMENT, IDENTIFICATION RESULT     │
   │ INFORMATION ABOUT LOS CHANNEL, OR SIGNAL     │
   │ GENERATED BASED ON CHARACTERISTIC OF LOS     │
   │ CHANNEL                                      │
   └─────────────────────┬────────────────────────┘
                         │
                    ┌─────────┐
                    │   END   │
                    └─────────┘
```

EP 4 325 750 A1

**Description**

Technical Field

The present disclosure relates to a communication method and apparatus which determine the existence or non-existence of a line-of-sight (LOS) of a radio propagation channel so as to transmit and process a channel frequency response and a channel impulse response signal, which are estimated through multi-band channel measurement in a wireless communication system, and, when the LOS exists, facilitate wireless transmission and reception operations using an LOS channel characteristic.

Background Art

Considering the development of wireless communication from generation to generation, technologies have been developed mainly for services targeting humans, such as voice calls, multimedia services, data services, and the like. Following the commercialization of 5th generation (5G) communication systems, it is expected that connected devices that have been exponentially growing will be connected to communication networks. Examples of things connected to networks may include vehicles, robots, drones, home appliances, displays, smart sensors connected to various infrastructures, construction machines, factory equipment, and the like. Mobile devices are expected to evolve in various form-factors such as augmented reality glasses, virtual reality headsets, hologram devices, and the like. In order to provide various services by connecting hundreds of billions of devices and things in the 6th generation (6G) era, there have been ongoing efforts to develop enhanced 6G communication systems. For these reasons, 6G communication systems are referred to as beyond-5G systems.

6G communication systems, which are expected to be commercialized around 2030, will have a peak data rate of tera (i.e., 1,000 giga)-level bps and radio latency less than 100 $\mu$sec. That is, the 6G communication systems will be 50 times as fast as 5G communication systems and have one tenth the radio latency of 5G.

In order to achieve such a high data rate and ultra-low latency, it has been considered to implement the 6G communication systems in a terahertz band (for example, 95 GHz to 3 THz bands). It is expected that, due to more severe path loss and atmospheric absorption in the terahertz bands than those in mmWave bands introduced in 5G, technologies capable of securing the signal transmission distance, that is, coverage, will become more important. It is necessary to develop, as major technologies for securing the coverage, radio frequency (RF) elements, antennas, novel waveforms having better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, in order to improve the coverage of terahertz-band signals, there has been ongoing discussion about new technologies such as metamaterial-based lenses and antennas, a high-dimensional spatial multiplexing technology using orbital angular momentum (OAM), reconfigurable intelligent surface (RIS), and the like.

Moreover, in order to improve spectral efficiency and overall network performance, the following technologies have been developed for 6G communication systems: a full-duplex technology for enabling an uplink transmission and a downlink transmission to simultaneously use the same frequency resource at the same time; a network technology for using satellites, high-altitude platform stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; use of artificial intelligence (AI) in wireless communication for improvement of overall network operation by using AI in a designing phase for developing 6G and internalizing end-to-end AI support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in the 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of the 6G communication systems in hyper-connectivity, including person to machine (P2M) as well as machine to machine (M2M), will facilitate the next hyper-connected experience. In more detail, it is expected that services such as truly immersive extended reality (XR), high-fidelity mobile hologram, and digital replica could be provided through the 6G communication systems. In addition, services such as remote surgery for security and reliability enhancement, industrial automation, and emergency response will be provided through the 6G communication system, such that the technologies could be applied in various fields such as industry, medical care, automobiles, home appliances, and the like.

As provision of various services is available according to development in the mobile communication system, there is a demand for a wireless transmission and reception scheme using a characteristic of a line-of-sight (LOS) channel.

Disclosure

Technical Problem

The present disclosure aims to determine the existence or non-existence of a line-of-sight (LOS) of a radio propagation channel through multi-band channel measurement in a wireless communication system, and to provide wireless transmission and reception operations using a characteristic of an LOS channel when the LOS channel exists.

Technical Solution

According to an embodiment of the present disclosure, a method of identifying, by a base station (BS), a line-of-sight (LOS) channel in a wireless communication system may include: receiving, from a user equipment (UE), a signal for measuring a channel in each of multiple bands; determining, based on the signal, whether the channel is the LOS channel in each of the multiple bands; in response to a determination that the LOS channel exists in each of the multiple bands, identifying the channel as the LOS channel; and transmitting data to the UE, based on the LOS channel.

According to an embodiment of the present disclosure, a method of identifying, by a UE, an LOS channel in a wireless communication system may include: receiving, from a BS, a signal for measuring a channel in each of multiple bands; determining, based on the signal, whether the channel is the LOS channel in each of the multiple bands; in response to a determination that the LOS channel exists in each of the multiple bands, identifying the channel as the LOS channel; and transmitting data to the BS, based on the LOS channel.

According to an embodiment of the present disclosure, a BS configured to identify an LOS channel in a wireless communication system may include: a transceiver; and a processor. The processor may be configured to control the transceiver to receive, from a UE, a signal for measuring a channel in each of multiple bands, determine, based on the signal, whether the channel is the LOS channel in each of the multiple bands, in response to a determination that the LOS channel exists in each of the multiple bands, identify the channel as the LOS channel, and control the transceiver to transmit data to the UE, based on the LOS channel.

Description of Drawings

FIG. 1 illustrates a basic structure of a time-frequency domain that is a radio resource domain in which data or a control channel is transmitted in long term evolution (LTE) and LTE-advanced (LTE-A) systems.

FIG. 2 is a diagram illustrating a physical downlink control channel (PDCCH) 201 that is a downlink (DL) physical channel on which downlink control information (DCI) of LTE is transmitted.

FIG. 3 is a diagram illustrating an example of a basic unit of time and frequency resources configuring a DL control channel which may be used in 5th generation (5G) or 6th generation (6G).

FIG. 4 is a diagram illustrating an example of a control resource set (CORESET) in which a DL control channel is transmitted in a 5G or 6G wireless communication system.

FIG. 5 is a diagram illustrating an example of configuration of a DL resource block (RB) structure in 5G.

FIG. 6 illustrates an internal structure of a base station (BS) or a user equipment (UE) which identifies a line-of-sight (LOS) channel in a wireless communication system, according to an embodiment of the present disclosure.

FIG. 7 illustrates a flowchart of a method of identifying, by a BS, an LOS channel in a wireless communication system, according to an embodiment of the present disclosure.

FIG. 8 illustrates a flowchart of a method of identifying, by a UE, an LOS channel in a wireless communication system, according to an embodiment of the present disclosure.

FIG. 9 illustrates a flowchart of an operation for LOS channel estimation, according to an embodiment of the present disclosure.

FIGS. 10A and 10B are diagrams illustrating an example of estimating a delay time via transmission and reception of a downlink random access channel (DL RACH) signal, according to an embodiment of the present disclosure.

FIGS. 11A and 11B illustrate results of measurement on a size of reception signals of an LOS channel and a non-line-of-sight (NLOS) channel, according to an embodiment of the present disclosure.

FIGS. 12A and 12B illustrate path loss measurement results of an LOS channel and an NLOS channel, according to an embodiment of the present disclosure.

FIGS. 13A, 13B, and 13C illustrate examples of power delay distribution and threshold voltages of an LOS channel and an NLOS channel, according to an embodiment of the present disclosure.

FIGS. 14A, 14B, 14C, and 14D illustrate a method of determining power delay distribution of LOS and NLOS channels, and an effective NLOS, according to an embodiment of the present disclosure.

FIGS. 15A, 15B, 15C, and 15D are diagrams for describing power delay distributions and root mean squared delay (RMS delay) spread results of LOS and NLOS channels, according to an embodiment of the present disclosure.

FIG. 16 illustrates a symbol design in a time domain according to the existence or non-existence of an LOS channel, according to an embodiment of the present disclosure.

FIGS. 17A and 17B illustrate a method of decreasing a reference signal density and increasing multiplexing, depending on the existence or non-existence of an LOS channel, according to an embodiment of the present disclosure.

FIGS. 18A and 18B illustrate an embodiment of a method of measuring a location of a UE, according to an embodiment of the present disclosure.

FIG. 19 illustrates a data transmission and reception flowchart of a method by which a BS identifies an LOS channel based on a random access preamble, according to an embodiment of the present disclosure.

FIG. 20 illustrates a data transmission and reception flowchart of a method by which a BS identifies an LOS channel based on a reference signal received from a UE, according to an embodiment of the present disclosure.

FIG. 21 illustrates a data transmission and reception flowchart of a method by which a UE identifies an LOS channel based on a reference signal received from a BS, according to an embodiment of the present disclosure.

FIG. 22 is a block diagram illustrating a structure of a UE according to an embodiment of the present disclosure.

FIG. 23 is a block diagram illustrating a structure of a BS according to an embodiment of the present disclosure.

## Best Mode

According to an embodiment of the present disclosure, a method of identifying, by a base station (BS), a line-of-sight (LOS) channel in a wireless communication system may be provided. The method may include: receiving, from a user equipment (UE), a reference signal for measuring a channel in each of multiple bands; determining, based on the reference signal, whether the channel is an LOS or a non-line-of-sight (NLOS) in each of the multiple bands; when the channel is determined as the LOS in each of the multiple bands, identifying the channel as the LOS channel; and transmitting, to the UE, at least one of identification result information about the LOS channel, or a signal generated based on a characteristic of the LOS channel.

According to an embodiment of the present disclosure, a method of identifying, by a UE, an LOS channel in a wireless communication system may be provided. The method may include: receiving, from a BS, a reference signal for measuring a channel in each of multiple bands; determining, based on the reference signal, whether the channel is an LOS or an NLOS in each of the multiple bands; when the channel is determined as an LOS in each of the multiple bands, identifying the channel as the LOS channel; and transmitting, to the BS, at least one of location information of the UE, identification result information about the LOS channel, or a signal generated based on a characteristic of the LOS channel.

According to an embodiment of the present disclosure, a BS configured to identify an LOS channel in a wireless communication system may be provided. The BS may include: a transceiver; and a processor, wherein the processor is configured to control the transceiver to receive, from a UE, a reference signal for measuring a channel in each of multiple bands, determine, based on the reference signal, whether the channel is an LOS or an NLOS in each of the multiple bands, when the channel is determined as the LOS in each of the multiple bands, identify the channel as the LOS channel, and control the transceiver to transmit, to the UE, at least one of location information of the UE, identification result information about the LOS channel, or a signal generated based on a characteristic of the LOS channel.

## Mode for Invention

Hereinafter, embodiments of the present disclosure will now be described more fully with reference to the accompanying drawings.

In the descriptions of the present disclosure, certain detailed explanations of the related art which are well known in the art to which the present disclosure belongs and are not directly related to the present disclosure are omitted. By omitting unnecessary explanations, the essence of the present disclosure may not be obscured and may be explicitly conveyed.

For the same reason, some elements in the drawings are exaggerated, omitted, or schematically illustrated. Also, the size of each element does not entirely reflect the actual size. In the drawings, the same or corresponding elements are denoted by the same reference numerals.

Advantages and features of the present disclosure and methods of accomplishing the same may be understood more readily by reference to the following detailed descriptions of embodiments and accompanying drawings of the present disclosure. The present disclosure may, however, be embodied in many different forms and should not be construed as being limited to the embodiments set forth herein. Rather, these embodiments are provided so that the present disclosure will be thorough and complete and will fully convey the concept of the present disclosure to one of ordinary skill in the art, and the present disclosure will only be defined by the appended claims. Throughout the specification, like reference numerals denote like elements.

It will be understood that each block of flowchart illustrations, and combinations of blocks in the flowchart illustrations, may be implemented by computer program instructions. The computer program instructions may be provided to a processor of a general-purpose computer, special purpose computer, or other programmable data processing apparatus, such that the instructions, which are executed by the processor of the computer or other programmable data processing apparatus, generate means for performing functions specified in the flowchart block(s). The computer program instructions may also be stored in a computer-executable or computer-readable memory that may direct the computer or other programmable data processing apparatus to function in a particular manner, such that the instructions stored in the computer-executable or computer-readable memory produce an article of manufacture including instruction means that perform the functions specified in the flowchart block(s). The computer program instructions may also be loaded onto the computer or other programmable data processing apparatus to cause a series of operations to be performed on the computer or other programmable apparatus to produce a computer implemented process such that the instructions that are executed on the computer or other programmable apparatus provide operations for implementing the functions specified in the flowchart block(s).

In addition, each block of the flowchart illustrations may represent a module, segment, or portion of code, which includes one or more executable instructions for performing specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term "unit", as used in the present embodiment, refers to a software or hardware component, such as field-programmable gate array (FPGA) or application-specific integrated circuit (ASIC), which performs certain tasks. However, the term "unit" does not mean to be limited to software or hardware. A "unit" may be configured to be in an addressable storage medium or configured to operate one or more processors. Thus, a "unit" may include, by way of example, components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in the components and "units" may be combined into fewer components and "units" or may be further separated into additional components and "units". Further, the components and "units" may be implemented to operate one or more central processing units (CPUs) in a device or a secure multimedia card. Also, in an embodiment, a "unit" may include one or more processors.

Hereinafter, a base station is an entity that allocates resources to a terminal, and may be at least one of a Node B, a base station (BS), an eNode B (eNB), a gNode B (gNB), a radio access unit, a BS controller, or a node on a network. Examples of the terminal may include a UE, a mobile station (MS), a cellular phone, a smartphone, a computer, a multimedia system capable of performing a communication function, or the like. Furthermore, embodiments of the present disclosure may also be applied to other communication systems having similar technical backgrounds or channel types. Furthermore, embodiments of the present disclosure are applicable to other communication systems through modification at the discretion of one of ordinary skill in the art without greatly departing from the scope of the present disclosure.

For convenience of descriptions, the present disclosure uses some of terms and names defined in the 3rd Generation Partnership Project (3GPP) long term evolution (LTE) standards (standards of 5G, NR, LTE, or similar system). However, the present disclosure is not limited to these terms and names, and may be equally applied to communication systems conforming to other standards.

Wireless communication systems providing voice-based services in early stages are being developed to broadband wireless communication systems providing highspeed and high-quality packet data services according to communication standards such as high speed packet access (HSPA), long term evolution (LTE) or evolved universal terrestrial radio access (E-UTRA), LTE-advanced (LTE-A), LTE-Pro of 3GPP, high rate packet data (HRPD), ultra mobile broadband (UMB) of 3GPP2, and 802.16e of the Institute of Electrical and Electronics Engineers (IEEE).

As a representative example of the broadband wireless communication systems, LTE and LTE-A systems employ orthogonal frequency division multiplexing (OFDM) for a downlink (DL) and employs single carrier-frequency division multiple access (SC-FDMA) for an uplink (UL). The UL refers to a radio link for transmitting data or a control signal from a terminal (e.g., a UE or an MS) to a base station (e.g., an eNodeB or a BS), and the DL refers to a radio link for transmitting data or a control signal from the base station to the terminal. The above-described multiple access schemes identify data or control information of each user in a manner that time-frequency resources for carrying the data or control information of each user are allocated and managed not to overlap each other, that is, to achieve orthogonality therebetween.

Hereinafter, a frame structure of LTE and LTE-A system will now be described in detail with reference to drawings.

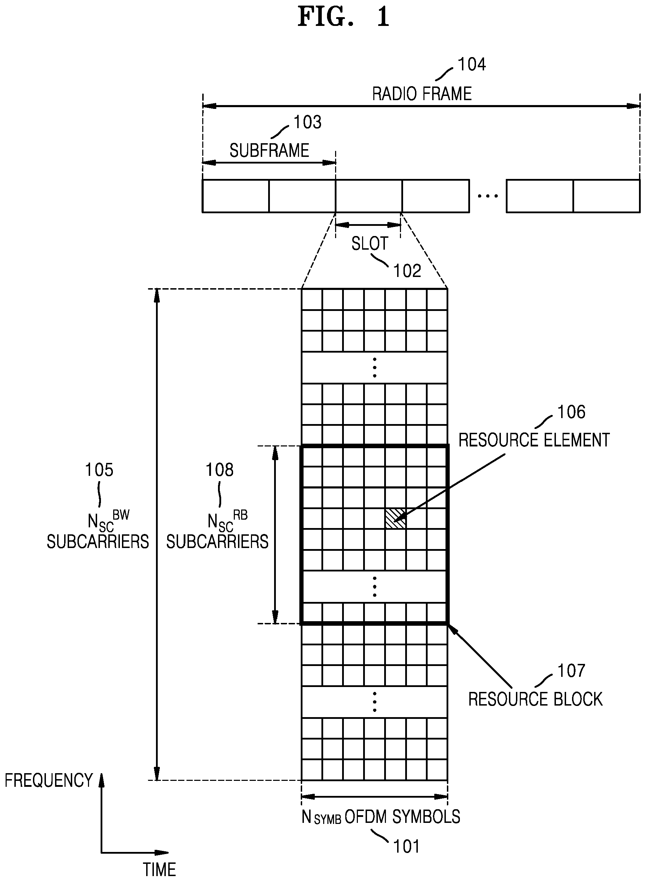

FIG. 1 illustrates a basic structure of a time-frequency domain that is a radio resource domain in which data or a control channel is transmitted in the LTE and LTE-A system.

Referring to FIG. 1, a horizontal axis represents a time domain and a vertical axis represents a frequency domain. A minimum transmission unit in the time domain is an OFDM symbol, and $N_{symb}$ OFDM symbols 101 may be gathered to constitute one slot 102, and two slots may be gathered to constitute one subframe 103. A length of the slot 102 may be 0.5 ms, and a length of the subframe 103 may be 1.0 ms. A radio frame 104 is a time domain unit including 10 subframes 103. A minimum transmission unit in a frequency domain is a subcarrier, and a bandwidth of a full system transmission bandwidth may be composed of $N_{BW}$ subcarriers 105. A basic unit of a resource in the time-frequency domain may be a resource element (RE) 106, and may be defined as an OFDM symbol index and a subcarrier index. A resource block (RB) or a physical resource block (PRB) 107 may be defined as $N_{symb}$ consecutive OFDM symbols 101 in the time domain and $N_{RB}$ consecutive subcarriers 108 in the frequency domain. Therefore, one RB 107 may include $N_{symb} \times N_{RB}$ REs 106. In general, a minimum transmission unit of data may be the RB unit. In the LTE system, in general, $N_{symb} = 7$, $N_{RB} = 12$, and $N_{BW}$ and $N_{RB}$ are proportional to a bandwidth of a system transmission band.

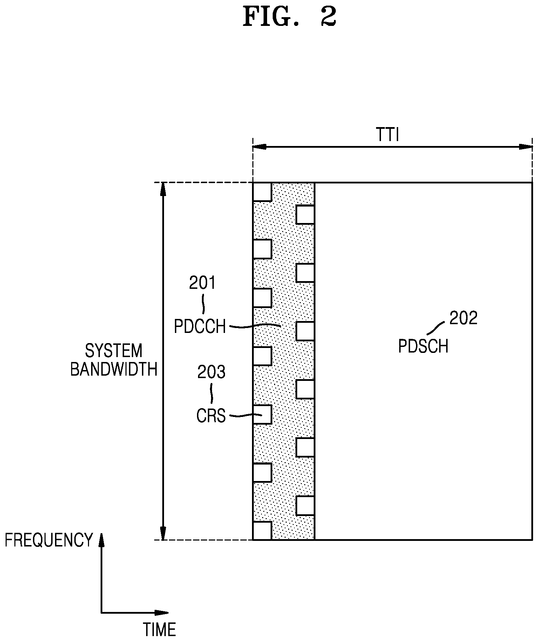

FIG. 2 is a diagram illustrating a physical downlink control channel (PDCCH) 201 that is a DL physical channel on which downlink control information (DCI) of LTE is transmitted.

Referring to FIG. 2, the PDCCH 201 may be time-multiplexed with a physical downlink shared channel (PDSCH) 202, which is a data transmission channel, and may be transmitted over a full system bandwidth. A region of the PDCCH 201 may be represented as the number of OFDM symbols, and the region of the PDCCH 201 may be indicated to the UE as a control format indicator (CFI) transmitted via a physical control format indicator channel (PCFICH). By allocating the PDCCH 201 to an OFDM symbol located at a start of a subframe, the UE may decode DL scheduling allocation as fast as possible, and by doing so, decoding delay with respect to downlink shared channel (DL-SCH), i.e., overall DL transmission delay may be decreased. Because one PDCCH 201 may deliver one DCI message and a plurality of UEs may be simultaneously scheduled for DL and UL, a plurality of PDCCHs 201 may be simultaneously transmitted in each cell. As a reference signal for decoding the PDCCH 201, a cell-specific reference signal (CRS) 203 may be used. The CRS 203 may be transmitted for every subframe over a full band, and scrambling and resource allocation varies according to cell identity (ID). Because the CRS 203 is a reference signal commonly used by all UEs, UE-specific beamforming cannot be used. Therefore, the multi-antenna transmission scheme for PDCCH of LTE is limited to open-loop transmission diversity. The number of ports of the CRS is implicitly notified to the UE from decoding of a physical broadcast channel (PBCH).

The resource allocation of the PDCCH 201 is based on a control-channel element (CCE), and one CCE consists of 9 resource element groups (REGs), i.e., a total of 36 REs. The number of CCEs required for the specific PDCCH 201 may be 1, 2, 4, or 8 and may vary according to a channel coding rate of a DCI message payload. As described above, different numbers of CCEs may be used to implement link adaptation of the PDCCH 201. The UE has to detect a signal without having information about the PDCCH 201, and in the LTE, a search space representing a set of CCEs is defined for blind decoding. The search space may be configured as a plurality of sets at aggregation level (AL) of each CCE and may not be explicitly signaled but may be implicitly defined via a function according to an ID of the UE and a subframe number. In each subframe, the UE performs decoding on the PDCCH 201 with respect to all available resource candidates that may be generated from CCEs in a configured search space, and processes information declared to be valid to the UE via CRC checking.

The search space may be classified to a UE-specific search space and a common search space. UEs in a certain group or all UEs may monitor a common search space of the PDCCH 201 so as to receive cell-common control information such as dynamic scheduling about system information or a paging message. For example, scheduling allocation information of a DL-SCH for transmission of System Information Block (SIB)-1 including business information of a cell may be received by monitor the common search space of the PDCCH 201.

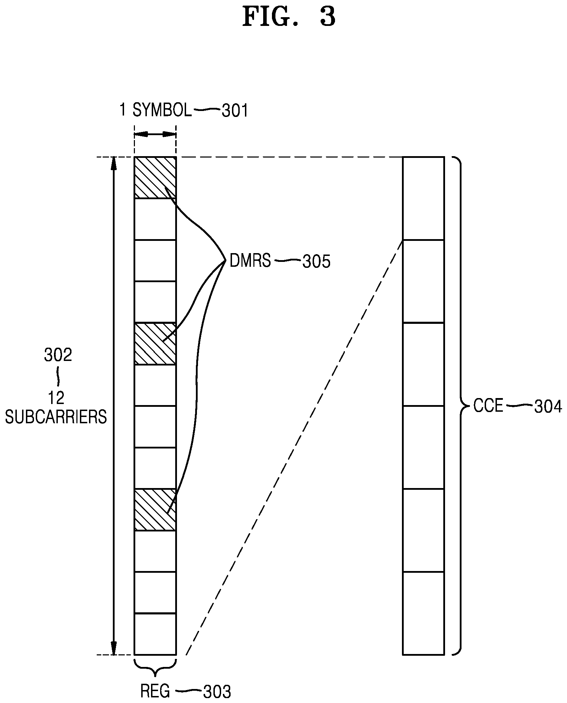

FIG. 3 is a diagram illustrating an example of a basic unit of time and frequency resources configuring a DL control channel which may be used in 5G or 6G.

Referring to FIG. 3, an REG 303 that is a basic unit of time and frequency resources configuring a control channel may consist of one OFDM symbol 301 on the time axis and 12 subcarriers 302, i.e., one RB, on the frequency axis. When configuring a basic unit of a control channel, a basic unit on the time axis is assumed to be one OFDM symbol 301, such that a data channel and a control channel may be time-multiplexed within one subframe. Because the control channel is positioned before the data channel, a processing time of a UE may be decreased such that it is easy to satisfy delay time requirements. A basic unit on the frequency axis of the control channel is configured to be one RB 302, such that frequency multiplexing between the control channel and the data channel may be further efficiently performed.

By concatenating the REG 303 shown in FIG. 3 with another REG, control channel regions with various sizes may be configured. For example, in a case where a basic unit to which a DL control channel is allocated in the 5G or 6G is a CCE 304, one CCE 304 may consist of a plurality of REGs 303. Describing the REG 303 shown in FIG. 3, the REG 303 may consist of 12 REs, and if one CCE 304 consists of 6 REGs 303, this means that one CCE 304 may consist of 72 REs. When a DL control resource set is configured, the control resource set may consist of a plurality of CCEs 304, and a particular DL control channel may be mapped to one or more CCEs 304 according to an AL in the control resource set and transmitted. The CCEs 304 in the control resource set are identified by numbers, and in this regard, the numbers may be allocated according to a logical mapping scheme.

The basic unit of the DL control channel shown in FIG. 3, i.e., the REG 303, may include REs to which DCI is mapped and REs to which a demodulation reference signal (DMRS) 305 that is a reference signal for decoding them are mapped. As shown in FIG. 3, the DMRS 305 may be transmitted in three REs in one REG 303. The DMRS 305 is transmitted by using the same precoding as a control signal mapped in the REG 303, and thus, the UE is able to decode control information without information about precoding being applied by a BS.

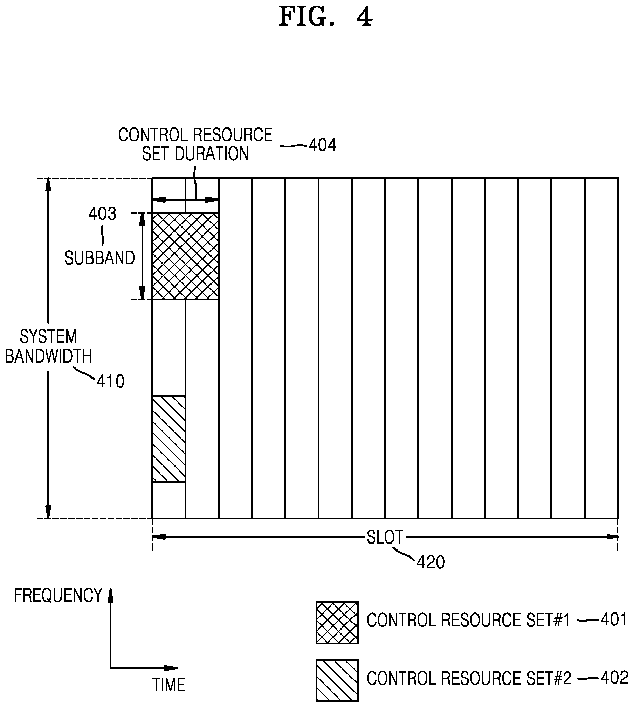

FIG. 4 is a diagram illustrating an example of a control resource set (CORESET) in which a DL control channel is transmitted in the 5G or 6G wireless communication system.

FIG. 4 illustrates the example in which two control resource sets (control resource set#1 401 and control resource set#2 402) are configured in a system bandwidth 410 on the frequency axis and one slot 420 on time axis (in the example of FIG. 4, it is assumed that one slot consists of 7 OFDM symbols). The control resource sets 401 and 402 may be configured as a particular subband 403 on the frequency axis within the full system bandwidth 410. One or more OFDM symbols may be configured on the time axis, and they may be defined as control resource set duration 404. In the example of FIG. 4, control resource set#1 401 is configured as control resource set duration of two symbols, and control resource set#2 402 is configured as control resource set duration of one symbol.

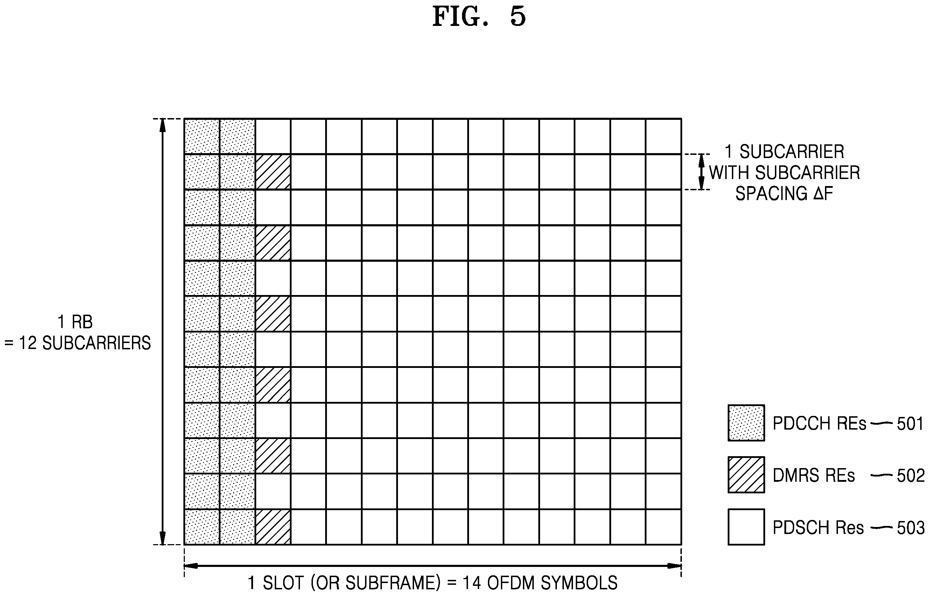

FIG. 5 is a diagram illustrating an example of configuration of a DL RB structure in the 5G. FIG. 5 illustrates a case in which it is configured that a specific UE uses 14 OFDM symbols as one slot (or subframe) in a DL, a PDCCH is transmitted on initial two OFDM symbols, and a DMRS is transmitted on a third symbol.

When a specific UE is scheduled a data channel, i.e., PUSCH or PDSCH, via the PDCCH, a plurality of items of data along with a DMRS are transmitted or received within a scheduled resource region. In the case of FIG. 5, in a specific RB to which a PDSCH is scheduled, data of the PDSCH is mapped to REs of the third symbol on which the DMRS is not transmitted and REs of fourth symbol up to last symbol and is transmitted. A subcarrier spacing Δf represented in FIG. 5 is 15kHz in the LTE/LTE-A system and may be one of {15, 30, 60, 120, 240, 480} kHz in the 5G system.

The afore-described LTE/LTE-A system and the 5G system are designed to transmit and receive a control channel, a reference signal, and a data channel, based on the OFDM scheme. That is, the system is configured to convert, by using Inverse Fourier Transform, a data symbol sequence $\{a_0, a_1, \ldots, a_{K-1}\}$ to be transmitted to each subcarrier location on the frequency axis to a signal on the time axis, and then to transmit it to a given time duration. The OFDM signal is expressed on the time axis by using [Equation 1] below.

[Equation 1]

$$s(t) = \sum_{k=0}^{K-1} a_k e^{j2\pi k \Delta f t} \cdot \text{rect}\left(\frac{t}{T}\right)$$

Here, Δf indicates subcarrier spacing, T indicates a length of an OFDM symbol, and rect(x) may be defined as

$$\text{rect}(x) = \begin{cases} 1 & 0 \leq x < 1 \\ 0 & \text{elsewhere} \end{cases}.$$

When an OFDM signal expressed by using [Equation 1] above is expressed on the frequency axis, a result thereof may be in the form of convolution of a Sinc signal and an impulse train of the data symbol sequence $\{a_0, a_1, \ldots, a_{K-1}\}$ transmitted on subcarriers with Δf spacing, by using [Equation 2] below.

[Equation 2]

$$S(f) = \mathcal{F}\{s(t)\} = \left[\sum_{k=0}^{K-1} a_k \delta(f - k\Delta f)\right] \otimes \text{sinc}(Tf)$$

Here, $\mathcal{F}\{\cdot\}$ indicates the Fourier transform with respect to a time-axis signal, and $\delta(\cdot)$ indicates a Dirac Delta function indicating impulse. $\text{sinc}(x) = \dfrac{\sin(\pi x)}{\pi x}$, and ⊗ indicates convolution. FIG. 5 may correspond to a case in which the OFDM signal is expressed on the frequency axis and $a_k$ of [Equation 2] above has the same value. In order for a signal transmitted on specific subcarrier not to give any effect on other subcarriers, $\Delta f = 1/T$ has to be satisfied in [Equation 1] and [Equation 2], and thus, [Equation 3] is referred to as a zero inter-carrier interference (ICI) condition allowing no interference between subcarriers.

[Equation 3]

$$\Delta f = \frac{1}{T}$$

That is, when subcarrier spacing is determined in an OFDM system applied to the LTE/LTE-A and 5G system, a length of an OFDM symbol may also be determined by using [Equation 3]. Accordingly, when a frequency bandwidth BW and an OFDM symbol length $T$ for transmitting an OFDM symbol are given, the number of transmittable subcarrier spacings cannot exceed $BW \times T$, and thus, an amount of data being transmittable with respect to the given symbol length T may be determined in proportion to the number of corresponding subcarrier spacings.

Hereinafter, embodiments of the present disclosure will now be described in detail with reference to accompanying drawings. Although the LTE/LTE-A and 5G systems are described as an example of embodiments of the present disclosure, the embodiments of the present disclosure may also be applied to other communication systems having similar technical backgrounds or channel types. For example, Beyond 5G (B5G) or 6th generation mobile communication technology (6G) which is developed after the 5G system may be included therein. Therefore, the embodiments of the present disclosure are applicable to other communication systems through modification at the discretion of one of ordinary skill in the art without greatly departing from the scope of the present disclosure.

Also, in the descriptions of the present disclosure, detailed explanations of the related art are omitted when it is deemed that they may unnecessarily obscure the essence of the present disclosure. The terms used therein are defined in consideration of functions used in the present disclosure, and may be changed according to the intent or commonly used methods of users or operators. Accordingly, definitions of the terms are understood based on the entire descriptions of the present specification.

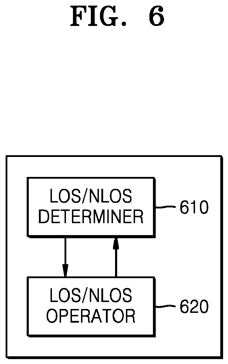

FIG. 6 illustrates an internal structure of a BS or a UE which identifies an LOS channel in a wireless communication system, according to an embodiment of the present disclosure.

In order to achieve a high transmission rate, a next-generation wireless communication system referred to as 6G or Beyond 5G (B5G) is expected to additionally use a millimeter wave (mmWave) band and a terahertz (THz) band as well as a frequency band below 6 GHz used in the existing 4G and 5G communication system. In the past, the mmWave band was defined as a frequency band of which wavelength ranges from 1 mm to 10 mm, i.e., from 30 GHz to 300 GHz. However, in the academic level, a band between 10 GHz and 100 GHz is collectively referred to as the mmWave band. Equally, in the past, a THz band was defined as a frequency bandwidth ranging from 0.1 THz to 10 THz. However, in the wireless communication system, the THz band may indicate a frequency band between 0.1 THz and 1 THz, i.e., a band between 100 GHz to 1,000 GHz.

A legacy wireless communication system mainly uses a relatively low frequency as a transmission frequency, and it is because the more a frequency increases, the more a free-space path loss (FSPL) increases and thus coverage of radio waves becomes short. Also, as radio wave characteristics such as reflection, diffraction, penetration, and scattering of radio waves deteriorate in a high frequency, a reception signal sharply decreases. Therefore, although a fast transmission rate may be achieved via a wide bandwidth by using a high frequency, a transmission area relatively decreases, such that an antenna and cell planning need to be delicately performed. In the 6G or B5G mobile communication system, a mixed use of an existing below 6-GHz band and an above 6-GHz mmWave/THz band is expected to achieve stable transmission and reception of radio-waves even in a radio fading area.

In the present disclosure, a mobile communication system that simultaneously uses the below 6-GHz band and the above 6-GHz mmWave/THz band as a transmission frequency may be defined as a multi-band communication system. In the multi-band communication system, different bands may have different radio propagation channel characteristics. By using the physical characteristic of the radio propagation channel, a plurality of pieces of various channel information may be obtained, and one of them is the existence or non-existence of an LOS channel. As radio propagation characteristics are similar in an existing single-band system, it is impossible to identify whether a channel is an LOS or a non-line-of-sight (NLOS). Also, unlike a radar system that detects a location via reflection and scattering of radio waves, even when the mobile communication system identifies an LOS channel, utilization of the identified LOS channel is low and thus, there was no method of distinguishing them. Also, although a method of distinguishing between LOS and NLOS by using statistical characteristics of a channel is disclosed in some documents, as this statistically calculates a channel measurement result of a single band, it was difficult to immediately use a result of the distinguishing.

On the other hand, in a case of an ultra wideband (UWB) communication system for which technologies and standardization are actively studied, it is known that location and LOS channel measurement via radio waves are possible by using a short-period pulse due to a wide occupied bandwidth. However, as the system has to use frequency and time resources to measure radio waves by altering an existing transmission signal of a communication system, waste of the resources may occur. Also, as additional equipment has to be used, in addition to an antenna and a radio frequency (RF) device used in the communication system, and a measurement distance is limited for a UWB band due to a transmission power restriction limited by FCC, utilization may be low.

As described above, radio characteristics such as reflection, diffraction, penetration, and scattering deteriorate in a frequency band such as the mmWave/THz band, and thus, communication may not be smooth in an NLOS radio fading area. On the other hand, in an LOS area other than the fading area, stable communication may be possible via a stable channel quality even in a high frequency band. Accordingly, if the B5G/6G communication system can correctly identify the existence or non-existence of an LOS channel and then perform a transmission operation matching a radio channel state, it is possible to prevent radio resources from being wasted due to unnecessary retransmission caused by a link failure, and a low modulation and coding scheme (MCS).

Therefore, the present disclosure proposes an operation method of identifying the existence or non-existence of an LOS of radio waves via multi-band channel measurement, a transmission and reception method corresponding to an LOS channel based on such determination, a method of determining the existence or non-existence of an LOS, and a scheme of estimating a location of radio waves. According to an embodiment of the present disclosure, a BS and a UE which use multiple bands may not use additional resources and may perform measurement of the existence or non-existence of an LOS by using a reference signal defined in the existing communication standard.

According to an embodiment of the present disclosure, provided are operation methods and apparatuses for a BS and a UE to determine the existence or non-existence of an LOS via a channel frequency response and a channel impulse response in a wireless communication system enabled for multi-band channel measurement, and to perform a transmission operation in an LOS channel state, based on the determination.

According to an embodiment of the present disclosure, the BS or the UE may include an LOS/NLOS determiner 610 and an LOS/NLOS operator 620. A processor 1930 of a BS 1900 to be described below may perform operations of the LOS/NLOS determiner 610 and the LOS/NLOS operator 620 of the BS, and a processor 2030 of a UE 2000 to be described below may perform operations of the LOS/NLOS determiner 610 and the LOS/NLOS operator 620 of the UE.

The LOS/NLOS determiner 610 according to an embodiment of the present disclosure may measure a multi-band channel and then may perform determination of the existence or non-existence of an LOS by using a received signal strength (RSS) difference or an FSPL difference.

The LOS/NLOS determiner 610 according to an embodiment of the present disclosure may measure a multi-band channel and then may perform determination of the existence or non-existence of an LOS according to a result of power delay profile (PDP) estimation. The determination of the existence or non-existence of an LOS according to a PDP may be performed by using at least one of a size of a main path signal of radio waves calculated as a channel impulse response by performing an inverse Fourier transform (IFT) on a channel frequency response result, the number of effective channel taps, or a root mean squared delay (RMS delay), or a delay spread which are statistically calculated.

When the LOS/NLOS determiner 610 according to an embodiment of the present disclosure determines that an LOS channel exists, an LOS channel result may be reported via an UL or a DL.

In the present disclosure, when the BS and the UE assure the LOS channel, the LOS/NLOS operator 620 according to an embodiment of the present disclosure may perform a waveform operation matching an LOS channel characteristic, scheduling and reference signal density conversion, and a transmission operation including radio wave-based location estimation by using an LOS channel characteristic.

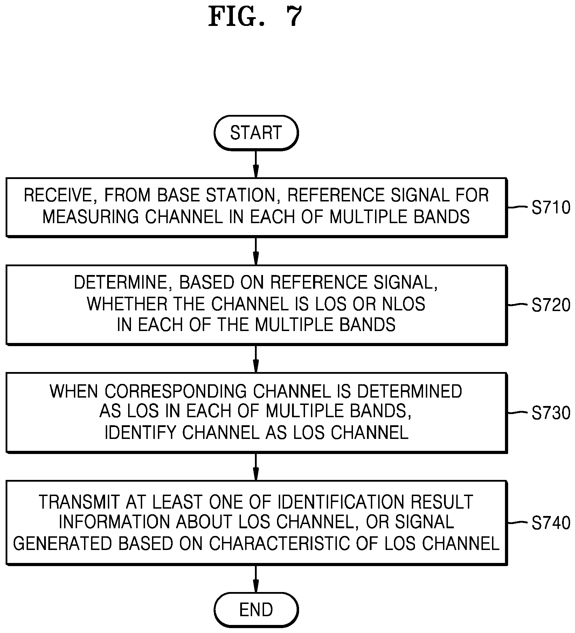

FIG. 7 illustrates a flowchart of a method of identifying, by a BS, an LOS channel in a wireless communication system, according to an embodiment of the present disclosure.

In operation S710, a BS may receive, from a UE, a reference signal for measuring a channel in each of multiple bands.

The BS according to an embodiment of the present disclosure may receive, from the UE, a random access preamble in each of the multiple bands. Based on the random access preamble received in each of the multiple bands, the BS may determine whether the channel is an LOS or an NLOS with respect to each of the multiple bands. For example, the BS may identify, based on the random access preamble, a minimum propagation distance between the UE and the BS. The BS may determine a reception power of the random access preamble, based on the minimum propagation distance. Also, based on the reception power of the random access preamble received in each of the multiple bands, and a threshold power value of a frequency band in which the random access preamble is received, the BS may determine whether the channel is an LOS or an NLOS.

According to an embodiment of the present disclosure, when a reception power of a random access preamble received in a first frequency band is greater than a threshold power value of the first frequency band, and a reception power of a random access preamble received in a second frequency band is greater than a threshold power value of the second frequency band, the BS may determine a channel as an LOS channel. When a channel is determined as an NLOS in at least one of the multiple bands, based on a random access preamble, the BS may receive a reference signal for measuring a channel in each of the multiple channels.

According to an embodiment of the present disclosure, the multiple channels may include the first frequency band and the second frequency band. However, the number of frequency bands included in the multiple bands is not limited 2, and at least two frequency bands may be included. Each frequency band included in the multiple bands may indicate a frequency band that is physically separate to show a difference of the frequency band. For example, in the present disclosure, the first frequency band may indicate a frequency band below 6 GHz, and the second frequency band may indicate a frequency band above and equal to 6 GHz.

According to an embodiment of the present disclosure, multiple bands may indicate at least two frequency bands having different characteristics. Referring to [Table 1] below, a pathloss exponent (n) and a shadowing value ($\sigma$) in an LOS and an NLOS in different frequencies of 28 GHz and 73 GHz are shown. For example, a pathloss exponent ($n_{LOS}$) in the LOS may be a value ranging between 1.1 and 1.7 in 28 GHz and 73 GHz. A pathloss exponent ($n_{NLOS}$) in the NLOS may be a value ranging between 2.7 and 5.3 in 28 GHz and 73 GHz. That is, the pathloss exponent ($n_{NLOS}$) in the NLOS may be a value being greater than the pathloss exponent ($n_{LOS}$) in the LOS. The shadowing value may be a variance. When referring to a shadowing value ($\sigma_{LOS}$) in the LOS, a variance of each of 28 GHz and 73 GHz may not be a great value in the LOS. However, referring to a shadowing value ($\sigma_{NLOS}$) in the NLOS, it is apparent that a variance increases as a frequency increases in the NLOS. As described above, a high frequency band and a low frequency band have different characteristics. According to embodiments of the present disclosure to be described below, the BS and the UE may identify an LOS channel by using multiple bands having different characteristics, or may transmit or receive data by using the LOS channel. The pathloss exponent and the shadowing value described above are values that may vary depending on an environment. Alternatively, the pathloss exponent and the shadowing value with respect to each of the multiple bands may each be a preset value.

[Table 1]

| v-v Polarization | LOS | | NLOS | |
|---|---|---|---|---|
| | $n_{LOS}$ [-] | $\sigma_{LOS}$ [dB] | $n_{NLOS}$ [-] | $\sigma_{NLOS}$ [dB] |
| 28 GHz Directional | 1.7 | 2.6 | 4.5 | 11.6 |
| 73 GHz Directional | 1.7 | 2.1 | 5.3 | 15.6 |
| 28 GHz Omnidirectional | 1.1 | 1.7 | 2.7 | 9.6 |
| 73 GHz Omnidirectional | 1.3 | 1.9 | 3.2 | 11.3 |

According to an embodiment of the present disclosure, there may be a difference that is greater than a preset value and is between frequencies of carrier of each of the multiple bands.

According to an embodiment of the present disclosure, the multiple bands may include at least two frequency bands that are separate by a value greater than a preset frequency difference. The preset frequency difference that is a difference between multiple frequency bands may be determined according to an environment. As another example, the preset frequency difference may be determined based on at least one of a pathloss exponent with respect to each of the multiple bands, a shadowing value, or a frequency value of carrier with respect to each of the multiple bands.

A resource for the UE according to an embodiment of the present disclosure to transmit a UL signal may be determined based on whether multi-band UL simultaneous TX is possible with respect to each of the multiple bands.

When the UE according to an embodiment of the present disclosure transmits a UL (e.g., a preamble or an RS) to the BS, whether the UE is enabled for multi-band UL simultaneous TX with respect to each of the multiple bands may be determined based on UE capability information. According to an embodiment, whether the UE is enabled for multi-band UL simultaneous TX with respect to each of the multiple bands may be determined based on at least one of classification of the UE or a category of the UE. For example, the UE capability information may include information about whether the UE is an apparatus corresponding to an integrated access and backhaul (IAB) node, information about whether the UE is an apparatus corresponding to a terminal, or the like. According to another embodiment, whether the UE is enabled for multi-band UL simultaneous TX with respect to each of the multiple bands may be determined in consideration of a condition such as whether a transmission threshold power value is greater than a transmission power value of the UE (e.g., PcMax > Threshold(Tx)), or the like.

According to an embodiment of the present disclosure, when the UE is enabled for multi-band UL simultaneous TX with respect to each of the multiple bands, a resource for the UE to transmit a signal in a low frequency band may be determined based on a predefined scheme. For example, a resource for the UE to transmit a signal in a high frequency band may be determined as a resource that is selectable for an occasion in which the UE transmits a signal by using a highest frequency on which the UE can operate in (partially) overlapped duration in which some time domains or all time domains overlap. (As an LOS operation is available in all frequency domains when an LOS is determined at a highest frequency) As another example, a resource for transmission of a signal in a high frequency band may be determined as a predefined resource in association with a resource of a selected low frequency band.

According to an embodiment of the present disclosure, when the UE is not enabled for multi-band UL simultaneous TX with respect to each of the multiple bands, a resource for the UE to transmit a signal in a low frequency band may be determined based on a predefined scheme or may be determined as a predefined resource in association with a resource of a high frequency band. For example, a resource for the UE to transmit a signal in a high frequency band may be determined as a predefined resource in association with a resource of a selected low frequency band. As another example, a resource for the UE to transmit a signal in a high frequency band may be determined as a first occasion after △T (a band switching time, or a defined time according to the standards). As another example, a resource for the UE to transmit a signal in a high frequency band may be determined as an occasion of a highest frequency from durations starting △T1 (a band switching time, or a defined time according to the standards) until △T2 (a defined time or a time determined as offset against △T1).

In operation S720, the BS may determine, based on the reference signal, whether the channel is an LOS or an NLOS in each of the multiple bands.

According to an embodiment of the present disclosure, the BS may determine, based on a channel impulse response of the reference signal, whether the channel is an LOS channel in each of the multiple bands.

For example, the BS may determine a delay power value of a reference signal received in the first frequency band, based on a channel impulse response of the reference signal received in the first frequency band. Also, the BS may determine a delay power value of a reference signal received in the second frequency band, based on a channel impulse response of the reference signal received in the second frequency band.

For example, the BS may determine, based on the channel impulse response of the reference signal received in the first frequency band, a first effective NLOS as a path having a power value corresponding to a difference value between a maximum reception delay power value of the reference signal received in the first frequency band and a threshold power value. Also, the BS may determine, based on the channel impulse response of the reference signal received in the second frequency band, a second effective NLOS as a path having a power value corresponding to a difference value between a maximum reception delay power value of the reference signal received in the second frequency band and the threshold power value.

For example, the BS may determine, based on the channel impulse response of the reference signal received in the first frequency band, a first RMS delay spread value of the reference signal received in the first frequency band. Also, the BS may determine, based on the channel impulse response of the reference signal received in the second frequency band, a second RMS delay spread value of the reference signal received in the second frequency band.

In operation S730, when the channel is determined as an LOS in each of the multiple bands, the BS may identify the channel as an LOS channel.

According to an embodiment of the present disclosure, when a reception power of a random access preamble received in a first frequency band is greater than a threshold power value of the first frequency band, and a reception power of a random access preamble received in a second frequency band is greater than a threshold power value of the second frequency band, the BS may determine a channel as an LOS channel.

According to an embodiment of the present disclosure, when a delay power value of a reference signal received in the first frequency band is greater than the threshold power value determined for the first frequency band, and a delay power value of a reference signal received in the second frequency band is greater than the threshold power value determined for the second frequency band, the BS may determine a channel as an LOS channel.

According to an embodiment of the present disclosure, when the number of first effective NLOSs is smaller than a reference number of effective NLOSs determined for the first frequency band, and the number of second effective NLOSs is smaller than a reference number of effective NLOSs determined for the second frequency band, the BS may determine a channel as an LOS channel.

According to an embodiment of the present disclosure, when a first RMS delay spread value is smaller than a reference delay spread value for the first frequency band, and a second RMS delay spread value is smaller than a reference delay spread value for the second frequency band, the BS may determine a channel as the LOS channel.

In operation S740, the BS may transmit, to the UE, at least one of identification result information about the LOS channel, or a signal generated based on a characteristic of the LOS channel.

According to an embodiment of the present disclosure, the BS may determine at least one value among a CP size, or density of the reference value, based on the characteristic of the LOS channel. The BS may generate, based on the determined value, a signal including data or the reference signal, and may transmit the generated signal to the UE.

According to an embodiment of the present disclosure, the BS may receive, from the UE, a reference signal request for measuring a location of the UE. The BS may transmit, to the UE, a reference signal for measuring a location of the UE. The BS may receive, from the UE, information about existence or non-existence of an LOS channel between the UE and the BS, and location information of the UE, based on the reference signal for measuring the location of the UE. Here, the existence or non-existence of the LOS channel and the location information of the UE may be determined based on the reference signal.

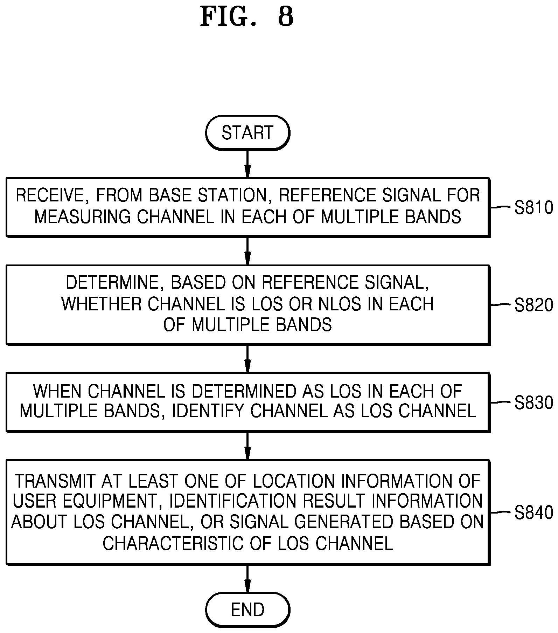

FIG. 8 illustrates a flowchart of a method of identifying, by a UE, an LOS channel in a wireless communication system, according to an embodiment of the present disclosure.

In operation S810, the UE may receive, from a BS, a reference signal for measuring a channel in each of multiple bands.

In operation S820, the UE may determine, based on the reference signal, whether a channel is an LOS or an NLOS in each of multiple bands.

According to an embodiment of the present disclosure, the UE may determine, based on a channel impulse response of the reference signal, whether the channel is an LOS channel in each of the multiple bands.

For example, the UE may determine a delay power value of a reference signal received in a first frequency band, based on a channel impulse response of the reference signal received in the first frequency band. Also, the UE may determine a delay power value of a reference signal received in a second frequency band, based on a channel impulse response of the reference signal received in the second frequency band.

For example, the UE may determine, based on the channel impulse response of the reference signal received in the first frequency band, a first effective NLOS as a path having a power value corresponding to a difference value between a maximum reception delay power value of the reference signal received in the first frequency band and a threshold power value. Also, the UE may determine, based on the channel impulse response of the reference signal received in the second frequency band, a second effective NLOS as a path having a power value corresponding to a difference value between a maximum reception delay power value of the reference signal received in the second frequency band and the threshold power value.

For example, the UE may determine, based on the channel impulse response of the reference signal received in the first frequency band, a first RMS delay spread value of the reference signal received in the first frequency band. Also, the UE may determine, based on the channel impulse response of the reference signal received in the second frequency band, a second RMS delay spread value of the reference signal received in the second frequency band.

In operation S830, when the channel is determined as an LOS in each of the multiple bands, the UE may identify the channel as an LOS channel.

According to an embodiment of the present disclosure, when a delay power value of a reference signal received in the first frequency band is greater than the threshold power value determined for the first frequency band, and a delay power value of a reference signal received in the second frequency band is greater than the threshold power value determined for the second frequency band, the UE may determine a channel as an LOS channel.

According to an embodiment of the present disclosure, when the number of first effective NLOSs is smaller than a reference number of effective NLOSs determined for the first frequency band, and the number of second effective NLOSs is smaller than a reference number of effective NLOSs determined for the second frequency band, the UE may determine a channel as the LOS channel.

According to an embodiment of the present disclosure, when a first RMS delay spread value is smaller than a reference delay spread value for the first frequency band, and a second RMS delay spread value is smaller than a reference delay spread value for the second frequency band, the UE may determine a channel as an LOS channel.

In operation S840, the UE may transmit, to the BS, at least one of location information of the UE, identification result information about the LOS channel, or a signal generated based on a characteristic of the LOS channel.

According to an embodiment of the present disclosure, the UE may determine density of the reference value, based on the characteristic of the LOS channel. The UE may transmit the reference signal to the BS, based on the determined density of the reference value.

According to an embodiment of the present disclosure, the UE may transmit, to the BS, a random access preamble in each of the multiple bands. The LOS channel may be determined based on a reception power of a random access preamble received in each of the multiple bands and a threshold power value of a frequency band in which a random access preamble is received, the reception power of the random access preamble may be determined based on a minimum propagation distance, and the minimum propagation distance between the UE and the BS may be identified based on the random access preamble. When at least one channel is determined as an NLOS in the multiple bands, based on the random access preamble, the UE may receive a reference signal for measuring a channel in each of the multiple bands.

According to an embodiment of the present disclosure, the UE may transmit a reference signal request to a plurality of BSs. The UE may receive a reference signal from the plurality of BSs. Based on the reference signal, the UE may determine the existence or non-existence of an LOS channel between the plurality of BSs and the UE, and location information of the UE.

According to an embodiment of the present disclosure, the UE may determine, based on UE capability information, its capability for multi-band UL simultaneous TX with respect to each of the multiple bands. Also, the UE may determine a resource for transmitting a signal, based on the capability for multi-band UL simultaneous TX.

The methods, performed by the UE and the BS, of identifying an LOS channel described above with reference to FIGS. 7 and 8 will now be described in detail with reference to drawings below.

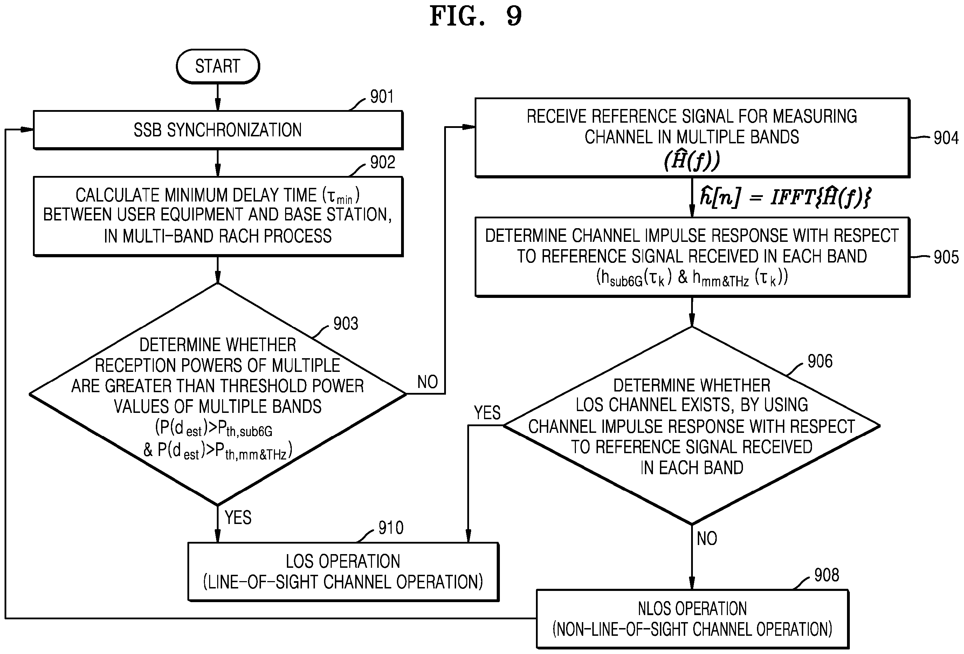

FIG. 9 illustrates a flowchart of an operating method of a BS for LOS channel estimation, according to an embodiment of the present disclosure. According to an embodiment of the present disclosure, the embodiment of FIG. 9 is described based on operations of the BS, but the UE may also perform some operations according to FIG. 9.

In operation 901 of FIG. 9, the BS or the UE may perform an SSB synchronization operation. When the BS or the UE performs the SSB synchronization operation, the SSB synchronization operation may include synchronization of a time axis and a frequency axis of a DL by using a synchronization signal block (SSB) commonly used in a communication system (e.g., LTE/LTE-A, a 5G mobile communication system, or B5G/6G mobile communication system to be developed thereafter). According to an embodiment of the present disclosure, the BS may transmit an SSB to the UE, in a signal band or multiple bands. Also, the BS may transmit the SSB to the UE, in a same time resource domain or different time resource domains. In a case of DL synchronization via an SSB, the UE may succeed or fail to receive the SSB, according to channel characteristics depending on frequencies. Therefore, when SSB synchronization succeeds in some bands, the UE and the BS may perform synchronization of a time-axis domain and a frequency-axis domain of a DL even for other band for which the UE fails to receive the SSB.

According to an embodiment of the present disclosure, the BS may form a same beam or different beams for a single band or multiple bands and transmit the SSB. For example, how the BS forms a beam may vary according to operating frequency bands of the BS. According to an embodiment of the present disclosure, an SSB synchronization operation (operation 901) using multiple bands may include a series of all synchronization operations with respect to different SSBs.

When the UE and the BS complete DL synchronization via the SSB synchronization operation of operation 901, in operation 902, the UE and the BS may perform a random access channel (RACH) operation using the multiple bands (hereinafter, the multi-band RACH process). In the present disclosure, a random access may indicate a contention-based access procedure used by the UE to perform UL synchronization and transmit Msg-3 to the BS. In the LTE/LTE-A and 5G communication systems, the UE may request the BS for UL synchronization and UL resource allocation, via a physical channel referred to as a physical random access channel (PRACH). According to an embodiment of the present disclosure, the RACH operation (902) using multiple bands may include an operation of the BS and the UE, the operation corresponding to a random access operation commonly used in the communication system (e.g., LTE/LTE-A, a 5G mobile communication system, or B5G/6G mobile communication system to be developed thereafter) for the multiple bands the BS and the UE attempt to simultaneously operate.

In operation 902, the UE may determine a minimum delay time $\tau_{min}$ between the BS and the UE via the multi-band RACH operation (902). A method of determining a minimum delay time $\tau_{min}$ according to an embodiment of the present disclosure will be described in detail below with reference to FIG. 9.

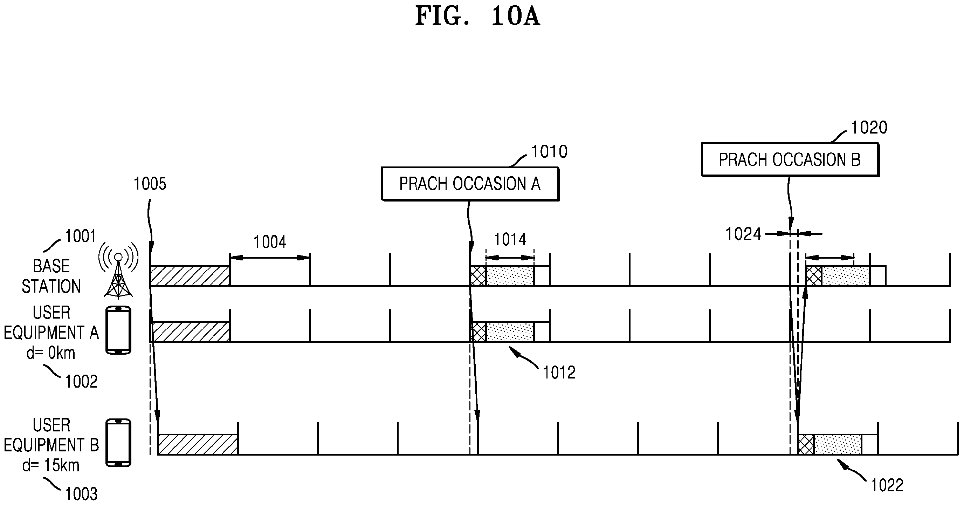

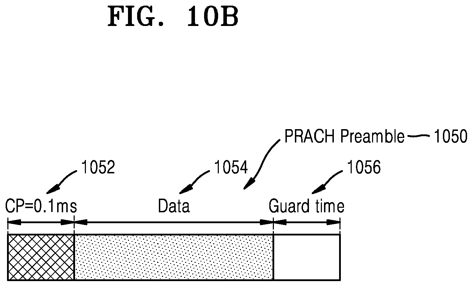

FIGS. 10A and 10B are diagrams illustrating an example of estimating a delay time via transmission and reception of a DL RACH signal, according to an embodiment of the present disclosure.

FIG. 10A illustrates an example of estimating a minimum delay time $\tau_{min}$ between the BS and the UE via the multi-band RACH operation (902) of operation 902 shown in FIG. 9. FIG. 10A illustrates a UE A 1002 closely distant from a BS 1001 by 0 km, and a UE B 1003 distant therefrom by 15 km.

For example, a grid 1004 on the horizontal axis in FIG. 10A may correspond to a subframe of a time-axis domain. According to an embodiment, the grid 1004 on the horizontal axis may indicate the subframe 103 shown in FIG. 1. Alternatively, as another example, the grid 1004 on the horizontal axis in FIG. 10A may be defined as the slot 102, according to a communication system to be operated. For example, in FIG. 10A, a subframe is defined based on 1 ms.

The BS 1001 may transmit, to the UE, information 1005 about time-frequency domain synchronization of a DL via an SSB synchronization operation and a physical channel for PRACH transmission. A time-frequency domain in which the UE can transmit a PRACH to the BS is referred to as a PRACH occasion. For example, in the 5G, as a beam corresponding to an SSB transmitted by the BS in the SSB synchronization (operation 901) is associated with a PRACH occasion, the BS may identify, based on the PRACH occasion, which SSB beam is selected by the UE.

FIG. 10A illustrates a situation in which different PRACH occasions are allocated to the UE A 1002 and the UE B 1003. For example, PRACH occasion A 1010 is allocated to the UE A 1002, and PRACH occasion B 1020 is allocated to the UE B 1003.

Referring to FIG. 10B, provided is a structure of a random access preamble (or, PRACH preamble) 1050 according to an embodiment of the present disclosure. The random access preamble 1050 may consist of a cyclic prefix (CP) 1052, preamble data 1054, and a guard time 1056. The preamble data 1054 may be used in a manner that Zadoff-Chu sequence having a small peak-to-average power ratio (PAPR) is cyclic shifted, and the UE and the BS may transmit or receive a PRACH signal by using a same sequence. For example, the CP 1052 may be 0.1 ms. The random access preamble 1050 may include a random access preamble A 1012 transmitted by the UE A 1002 and a random access preamble B 1022 transmitted by the UE B 1003.

Here, referring to FIG. 10A, as a physical distance between the UE A 1002 and the BS 1001 is 0 km, a round-trip time (RTT) is 0 ms. Therefore, the BS 1001 may receive the random access preamble A 1012 transmitted by the UE A 1002, in a time-axis domain matching a grid of a time-axis domain of the BS 1001.

On the other hand, a unilateral propagation delay time may occur in the random access preamble B 1022 transmitted by the UE B 1003, due to a remote distance to the BS 1001. Also, as a round-trip delay time exists in transmission and reception of radio waves, the BS 1001 may receive the random access preamble B 1022 transmitted by the UE B 1003, at a time delayed by 0.1 ms which is twice the unilateral propagation delay time of 0.05 ms. Therefore, the BS 1001 may identify a propagation delay time of the UE B 1003, by receiving the random access preamble B 1022 in a delayed time domain, compared to a detection window 1014. Also, the BS 1001 may perform a UL synchronization operation for determining timing offset, via the propagation delay time of the UE B 1003. For example, time offset 1024 in the BS 1001 with respect to the UE B 1003 may be 0.1 ms.

The BS may identify a minimum delay time $\tau_{min}$ for receiving a UL via the RACH operation 902. Also, the BS may determine whether a corresponding channel is an LOS or an NLOS, by using the minimum delay time $\tau_{min}$ for receiving a UL. An operation corresponding thereto will now be described in detail in a first embodiment.

<First embodiment>

In operation 903, the BS may determine whether the corresponding channel is an LOS channel, by determining whether reception powers of the multiple bands are greater than threshold power values of the multiple bands.

First, the BS may estimate a minimum propagation distance $d_{est}$ between the UE and the BS, based on the minimum delay time $\tau_{min}$. The minimum propagation distance $d_{est}$ may be determined as below by multiplying propagation speed c by the minimum delay time $\tau_{min}$ estimated in the RACH operation (operation 902).

$$[Equation\ 4]$$

$$d_{est} = c \times \tau_{min}$$

The BS may determine a reception power in a free space or an LOS radio channel situation by using the calculated minimum propagation distance $d_{est}$ (e.g., use of free-space pathloss formula as below).

$$[Equation\ 5]$$

$$P_r(d_{FS}; \lambda) = P_T \times D_t \times D_r \left(\frac{\lambda}{4\pi d_{FS}}\right)^2$$

Here, $P_r(d_{FS};\lambda)$ may indicate a reception power [W] when a distance between antennas is $d_{FS}$ in a free space, $P_T$ may indicate a transmission power [W] of a transmission antenna, $D_t$ may indicate an antenna gain of the transmission antenna, $D_r$ may indicate an antenna gain of a reception antenna, and $\lambda$ may indicate a wavelength.

A size of a received signal which is calculated by using [Equation 5] is a value that varies according to a size and distance of a frequency band in the multiple bands. $P_T$, $D_t$, $D_r$ may be system parameters for calculating a reception power in a mobile communication system (e.g., LTE/LTE-A mobile communication system, a 5G mobile communication system, or B5G/6G mobile communication system to be developed thereafter). $P_T$, $D_t$, $D_r$ may be values that are already calculated and known to the BS and the UE. Alternatively, the BS and the UE may obtain the values via information transmitted or received via a UL/DL control signal, e.g., RRC connection. A wavelength in [Equation 6] may be defined by being substituted with a frequency, due to a characteristic of radio waves ($c = f\lambda$).

$$[Equation\ 6]$$

$$P_r(d_{FS}; \lambda) \underset{\lambda=\frac{f}{c}}{\longrightarrow} P_r(d_{FS}; f) = P_T \times D_t \times D_r \left(\frac{f}{4\pi d_{FS} c}\right)^2$$

In operation 903, the BS may configure a threshold power of the multiple bands by using [Equation 6] described above. For example, the multiple bands may be divided into a below 6-GHz band and a above 6-GHz band which are respectively referred to as sub6G and mm&THz, and respective transmission frequencies may be $f_{sub6G}$ and $f_{mm\&THz}$. Threshold powers $f_{sub6G}$ and $f_{mm\&THz}$ of two bands which are proposed in the present disclosure may be configured as below by using [Equation 7].

[Equation 7]

$$P_{\mathrm{th,sub6G}} = P_r(d_{est}; f_{\mathrm{sub6G}}) = P_T \times D_t \times D_r \left(\frac{f_{\mathrm{sub6G}}}{4\pi d_{FS}c}\right)^2$$

$$P_{\mathrm{th,mm\&THz}} = P_r(d_{est}; f_{\mathrm{mm\&THz}}) = P_T \times D_t \times D_r \left(\frac{f_{\mathrm{mm\&THz}}}{4\pi d_{FS}c}\right)^2$$

In operation 903, the BS may compare reception powers $P_r(d_{est}; f_{\mathrm{sub6G}})$ and $P_r(d_{est}; f_{\mathrm{mm\&THz}})$ of the multiple bands with threshold power values $P_{\mathrm{th,sub6G}}$ and $P_{\mathrm{th,mm\&THZ}}$ (i.e., threshold power values calculated by using [Equation 7]), respectively. For example, the BS may determine whether a power value of a signal received in a low frequency band is greater than a threshold power value of the low frequency band, and a power value of a signal received in a high frequency band is greater than a threshold power value of the high frequency band. (i.e., $P(d_{est}; f_{\mathrm{sub6G}}) > P_{\mathrm{th,sub6G}}$ & $P(d_{est}; f_{\mathrm{mm\&THz}}) > P_{\mathrm{th,mm\&THz}}$) The BS may determine an LOS channel when the reception powers are all great in both bands, and may perform the LOS operation (operation 910).

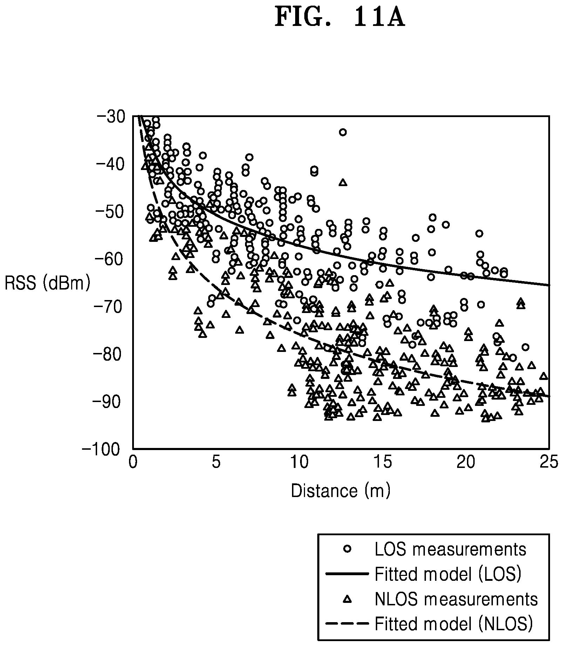

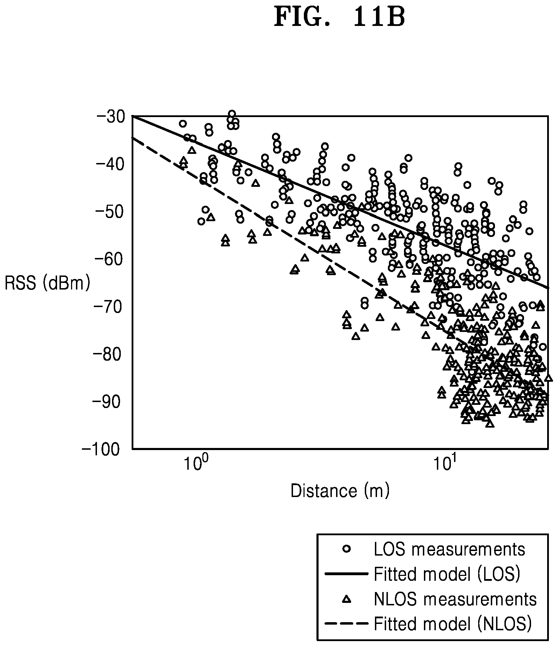

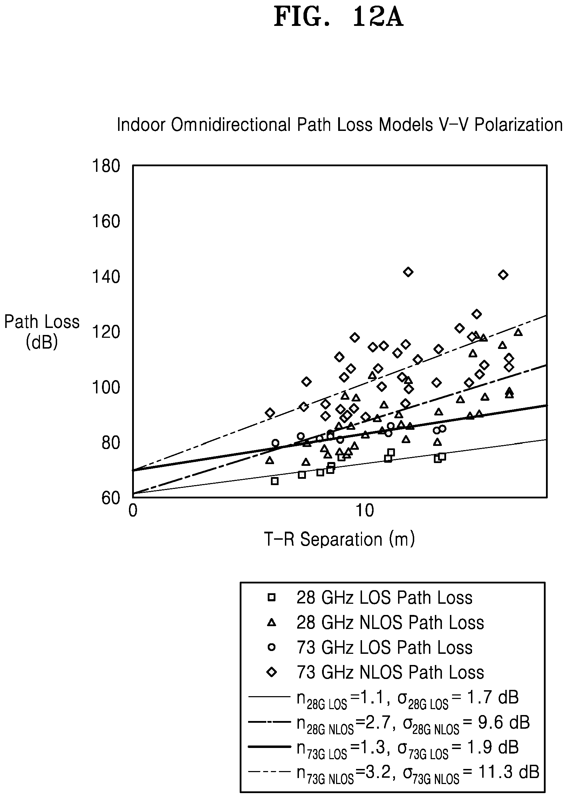

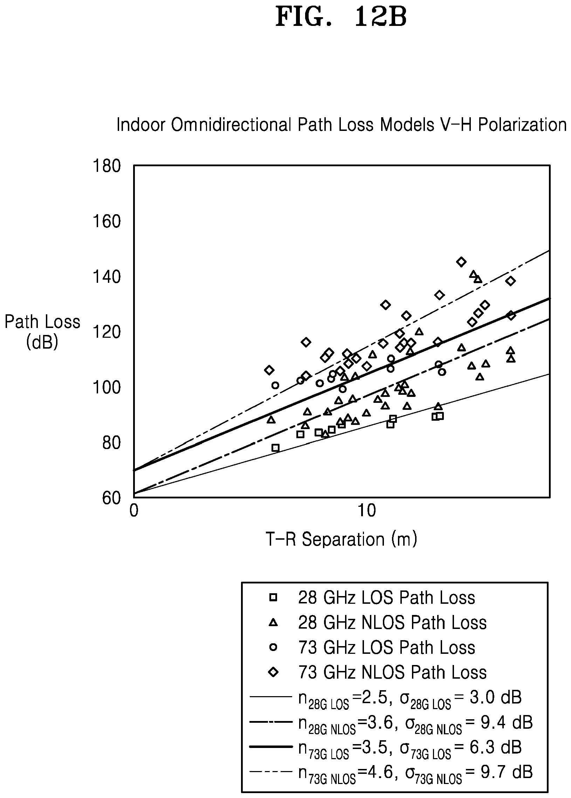

When an LOS channel for transmission exists in a general radio propagation channel environment, the BS receives a power of a signal received via an LOS with a maximum reception power at a minimum radio transmission time, and thus, the BS can compare a reception power with a threshold power, according to the method described above. However, a power of a signal received via an LOS channel does not always include only the power of the signal received via a path directly to the BS. For example, as various waves are received by the BS due to reflection, diffraction, refraction, or the like, a reception power may increase due to constructive interference, or may decrease. However, as a strength of an NLOS radio wave reaches while being sharply decreased, compared to an LOS radio wave, the NLOS radio wave does not greatly affect a reception power. Therefore, the BS may identify an LOS by comparing a reception power value with a threshold power value with respect to each of the multiple bands. With reference to FIGS. 11 and 12, it is possible to check characteristics of reception powers of an LOS and an NLOS.

FIGS. 11A and 11B illustrate results of measurement on a size of reception signals of an LOS channel and an NLOS channel, according to an embodiment of the present disclosure. FIGS. 11A and 11B illustrate the measurement results in which reception power strength of an LOS and an NLOS according to distances are shown, which may be disclosed in the reference document (Xiao, Zhuoling, et al. "Non-line-of-sight identification and mitigation using received signal strength." IEEE Transactions on Wireless Communications 14.3 (2014): 1689-1702).

FIG. 11A illustrates reception signals of the LOS channel and the NLOS channel when a distance on the x axis is a linear unit. Also, FIG. 11B is a diagram where the distance on the x axis is scaled in a log scale, and shows the same result as FIG. 11A. As illustrated in FIGS. 11A and 11B, the LOS indicates a high reception power on the same distance, compared to the NLOS, and thus, the LOS channel may be identified by the method of operation 903.

FIGS. 12A and 12B illustrate path loss measurement results of an LOS channel and an NLOS channel, according to an embodiment of the present disclosure. FIGS. 12A and 12B shown graphs of path losses of an LOS and an NLOS which are measured in 28-GHz and 73-GHz bands, which may be disclosed in the reference document (Deng, Sijia, Mathew K. Samimi, and Theodore S. Rappaport. "28 GHz and 73 GHz millimeter-wave indoor propagation measurements and path loss models." 2015 IEEE International Conference on Communication Workshop (ICCW). IEEE, 2015) As in FIGS. 12A and 12B, it is apparent that there is a difference between the LOS and the NLOS, as in FIGS. 11A and 11B. Therefore, FIGS. 12A and 12B also show that the BS can identify an LOS channel by the method of operation 903.

The important point in the present disclosure is that not only a reception signal for a single band is used, but sizes of reception signals the BS measured for multiple bands are simultaneously received calculated. As described above, compared to a low frequency below 6 GHz, a loss of radio waves propagating on an NLOS is greater in a high frequency band of the above 6-GHz mmWave/THz band. That is, in below 6 GHz, a reception power is greatly changed by radio waves receiving on the NLOS, but in above 6 GHz, a relatively stable result may be obtained. Therefore, as the BS uses sizes of signals received by simultaneously using two bands, accuracy of determination of the existence or non-existence of an LOS may be greatly improved, compared to measurement only using a single band.

<Second embodiment>

In operation 904 of FIG. 9, the BS may receive, from the UE, a reference signal for measuring a channel in the multiple bands. Also, in operation 905, the BS may calculate a channel impulse response with respect to the reference signal. Here, as an example but not limited thereto, the reference signal may include a sounding reference signal (SRS) received via a UL.

For example, the UE may generate a reference signal allocated to multi-band radio resources. A method of generating and allocating a reference signal may follow a method of generating and allocating a reference signal which is generally defined in the LTE/LTE-A, and the 5G and the B5G and 6G communication system, and may include, for example, a demodulation reference signal (DMRS) and SRS transmission operation defined in the LTE/LTE-A and 5G. In operation 904, the UE may transmit, to the BS, the reference signal by allocating a radio resource in a frequency domain. Here, the UE may transmit, to the BS, a UL reference signal for channel measurement in the multiple bands.

In operation 905, the BS may perform inverse Fourier transform on a channel frequency response ($\hat{H}(f)$) of the reference signal, based on the reference signal received from the UE. (that is, $\hat{h}[n] = IFFT\{\hat{H}(f)\}$) via inverse Fourier transform, the BS may estimate or determine a channel impulse response ($\hat{h}[n]$) of a reference signal for each of the multiple bands. According to an embodiment of the present disclosure, the BS may determine a channel impulse response ($h_{sub6G}(\tau_K)$) with respect to a reference signal received in a low frequency and a channel impulse response ($h_{mm\&THz}(\tau_K)$) with respect to a reference signal received in a high frequency.

According to another embodiment of the present disclosure, in operations 904 and 905, the BS may perform an operation of transmitting and receiving a DL reference signal for calculating a channel impulse response. Here, as an example but not limited thereto, the DL reference signal may include a DMRS signal.

In operation 906, the BS may identify whether an LOS channel exists, by using the channel impulse response with respect to the reference signal received in each of the multiple bands. The BS or the UE may identify the LOS channel by using at least one of a second-1 embodiment, a second-2 embodiment, or a second-3 embodiment.

<Second-1 embodiment>

According to the second-1 embodiment, the BS or the UE may identify the existence or non-existence of an LOS via a PDP or an intensity delay profile (IDP) which is obtained as a channel impulse response.

According to an embodiment of the present disclosure, the BS or the UE may determine a channel between the BS and the UE as an LOS channel, based on a determination that a channel impulse response with respect to a reference signal transmitted in a low frequency band is greater than a threshold power value of the low frequency band (i.e., $h_{sub6G}(\tau_0) > h_{th,sub6G}$) and a channel impulse response with respect to a reference signal transmitted in a high frequency band is greater than a threshold power value of the high frequency band ($h_{mm\&THZ}(\tau_0) > h_{th,\ mm\&THz}$). (That is, $h_{sub6G}(\tau_0) > h_{th,sub6G}$ & $h_{mm\&THz}(\tau_0) > h_{th,\ mm\&THz}$)

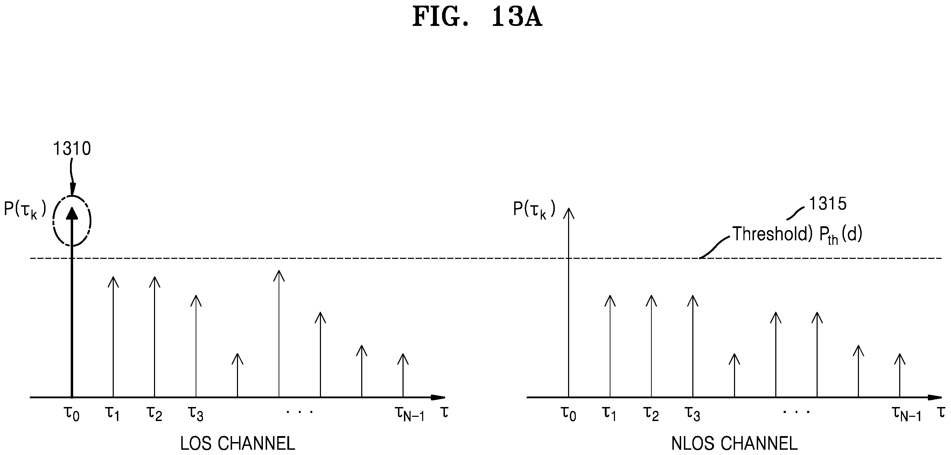

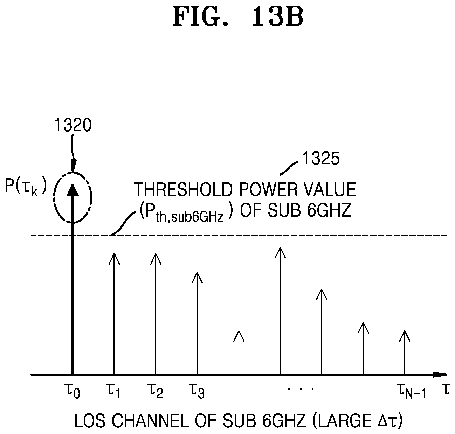

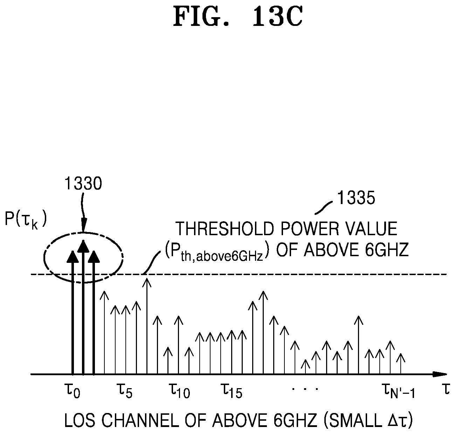

FIGS. 13A, 13B, and 13C illustrate examples of power delay distribution and threshold voltages of an LOS channel and an NLOS channel, according to an embodiment of the present disclosure.

FIG. 13A shows a difference between an LOS channel and an NLOS channel with respect to multipath channels arriving at respective delay times. In the LOS channel, when a delay time of radio waves arriving first is referred to as $\tau_0$, it is shown that intensity of a reception power $P(\tau_0)$ 1310 has a value greater than a threshold power $P_{th}(d)$ 1315. That is, it is possible to check that the BS or the UE can identify an LOS channel via existence of a signal having a reception power value greater than the threshold power 1315. As an example but not limited thereto, the threshold power 1315 may be configured by using a calculation result of [Equation 7].

FIGS. 13B and 13C illustrate a method of identifying an LOS channel according to the second-1 embodiment by using a multi-band, according to an embodiment of the present disclosure.

FIG. 13B illustrates a channel impulse response in a low frequency band (e.g., Sub 6 GHz), according to an embodiment of the present disclosure, and FIG. 13C illustrates a channel impulse response in a high frequency band (e.g., Above 6 GHz), according to an embodiment of the present disclosure. Referring to FIG. 13B, the channel impulse response in the low frequency band (e.g., Sub 6 GHz) may exist only via a single path 1320. However, referring to FIG. 13C, with respect to the high frequency band (e.g., Above 6 GHz), a plurality of LOS channels 1330 may be received due to delicate delay resolution due to a broad frequency bandwidth. Compared to the first embodiment, in the second-1 embodiment, the existence or non-existence of an LOS channel may be analyzed with a higher accuracy by using characteristics of a radio channel described with reference to FIGS. 13B and 13C.

According to an embodiment of the present disclosure, with respect to a multi-band channel, a BS or UE may compare a minimum delay power value $P(\tau_0)$ 1320 for a reference signal transmitted in a low frequency band with a threshold power value ($P_{th,sub6GHz}$) 1325 of the low frequency band, and may simultaneously compare a minimum delay power value $P(\tau_0)$ 1330 for a reference signal transmitted in a high frequency band with a threshold power value ($P_{th,mm\&THZ}$) 1335 of the high frequency band. When the BS or the UE receives a minimum delay power value $P(\tau_0)$ greater than a threshold power value in frequency bands (e.g., Sub 6 GHz and Above 6 GHz) (i.e., $P_{sub6G}(\tau_0) > P_{th,sub6GHz}$ & $P_{mm\&THz}(\tau_0) > P_{th,\ mm\&THz}$), the BS or the UE may determine the corresponding channel as an LOS channel, and may perform the LOS channel operation 910.

<Second-2 embodiment>

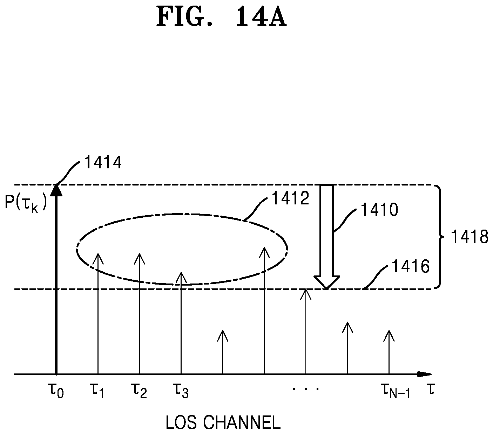

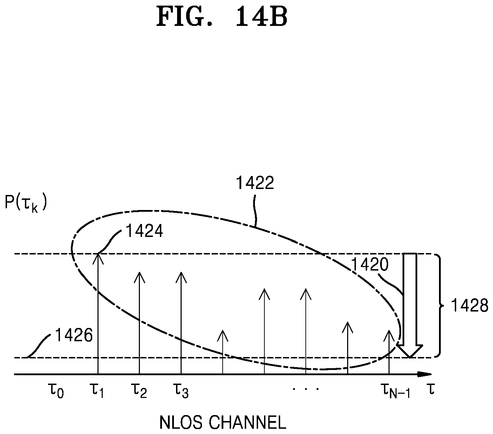

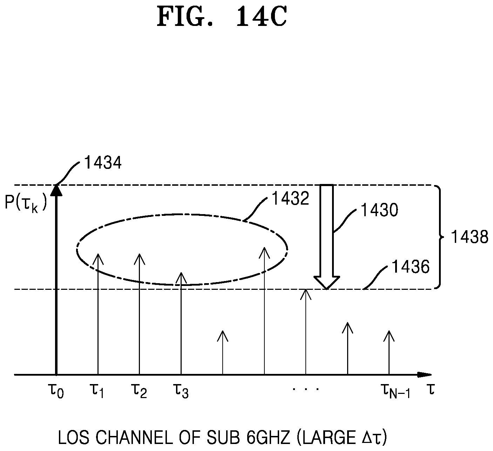

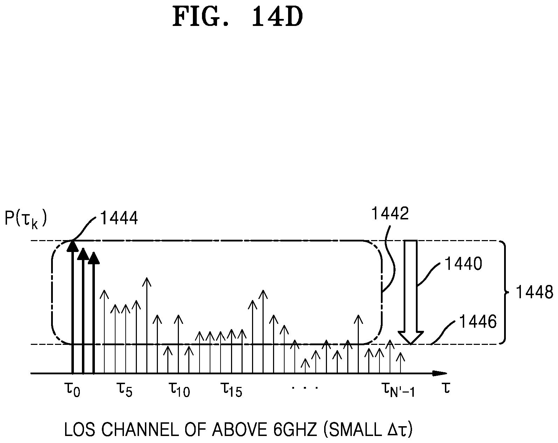

According to the second-2 embodiment, the BS or the UE may determine the existence or non-existence of an LOS channel by analyzing even a multi-path component of a channel impulse response. For example, the BS or the UE may determine the existence or non-existence of an LOS channel via the number of other paths within a preset size range with reference to a size of a minimum delay power $P(\tau_0)$ of the channel impulse response. With reference to FIG. 14, the second-2 embodiment will now be described in detail.

FIGS. 14A, 14B, 14C, and 14D illustrate a method of determining power delay distribution of LOS and NLOS channels, and an effective NLOS, according to an embodiment of the present disclosure.

Referring to FIG. 14A, in a case of an LOS channel, there may be four NLOS channels (NLOS paths) 1412 having a difference of a threshold power 1410 (e.g., 30 dB) or less, compared to a maximum reception power. On the other hand, referring to FIG. 14B, in a case of an NLOS channel, it is possible to check that eight NLOS channels 1422 exist. That is, referring to the LOS channel of FIG. 14A, a range between a value 1416 and a maximum reception power 1414 may be determined as a range 1418 for determination of an effective NLOS path, wherein the value 1416 is low by a threshold power 1410 (e.g., 30dB) compared to the reception power 1414 (i.e., a maximum reception power in the LOS channel) of a reference value $\tau_0$. Paths having a reception power value included in the range 1418 may be determined as an effective NLOS path 1412, and according to the embodiment of FIG. 14A, it is possible to check that the four NLOS channels 1412 exist. Equally, referring to the NLOS channel of FIG. 14B, a range between a value 1426 and a maximum reception power 1424 may be determined as a range 1428 for determination of an effective NLOS path, wherein the value 1426 is low by a threshold power 1420 (e.g., 30dB) compared to the reception power 1424 (i.e., a maximum reception power in the NLOS channel) of a reference value $\tau_1$. According to an example of FIG. 14B, it is possible to check that the eight NLOS channels 1422 exist. That is, paths having a power value of a difference between a maximum power value and a threshold power, or less in each of frequency bands may be determined as effective NLOS paths, and the number of effective NLOS paths of a corresponding frequency band may be determined. In a case of the LOS channel in the example of FIGS. 14A and 14B, a reception power level of an LOS is large and thus the number of effective NLOS paths 1412 is small, however, in a case of the NLOS channel, most reception power levels are similar and thus the number of calculated effective NLOS paths 1422 is sharply increased, compared to an LOS channel. Therefore, the existence or non-existence of an LOS channel may be classified, based on the number of effective NLOS paths.

Also, by using multi-band channel measurement proposed in the present disclosure, an accuracy of an operation of determining an LOS channel according to the second-2 embodiment may be further improved. It is because, when a broad band is used in a high frequency band, delay resolution is increased in the high frequency band, as described above. When the delay resolution is increased, the number of NLOS channels corresponding thereto is also sharply increased, such that identification of an NLOS channel may be easier than a low frequency band.

FIGS. 14C and 14D illustrate a method of identifying an LOS channel according to the second-2 embodiment by using a multi-band, according to an embodiment of the present disclosure.

FIG. 14C illustrates effective NLOS paths and the number of effective NLOS paths in a low frequency band (e.g., Sub 6 GHz), according to an embodiment of the present disclosure, and FIG. 14D illustrates effective NLOS paths and the number of effective NLOS paths in a high frequency band (e.g., Above 6 GHz), according to an embodiment of the present disclosure.

Referring to FIG. 14C, in a low frequency band, a range 1438 between a value 1436 and a maximum reception power $P(\tau_0)$ 1434 may be determined as a range for determination of an effective NLOS path, wherein the value 1436 is low by a threshold power 1430 (e.g., 30dB) compared to the reception power 1434 (i.e., a maximum reception power in sub 6GHz) of a reference value $\tau_0$. According to an embodiment of the present disclosure, a value of the threshold power 1430 is described as 30dB, but the value of the threshold power 1430 is not limited thereto and may be set to other value. According to an embodiment of the present disclosure, the BS or the UE may determine the NLOS channels 1422 to be paths having a reception power value included in the range 1438. According to an example of FIG. 14C, it is possible to check that four NLOS paths exist.

Referring to FIG. 14D, in a high frequency band, a range 1448 between a value 1446 and a maximum reception power $P(\tau_0)$ 1444 may be determined as a range for determination of an effective NLOS path, wherein the value 1446 is low by a threshold power 1440 (e.g., 30dB) compared to the reception power 1444 (i.e., a maximum reception power in above 6GHz) of a reference value $\tau_0$. According to an embodiment of the present disclosure, a value of the threshold power 1440 is described as 30dB, but the value of the threshold power 1440 is not limited thereto and may be set to other value. According to an embodiment of the present disclosure, the BS or the UE may determine NLOS channels to be paths having a reception power value included in the range 1448. According to an example of FIG. 14D, it is possible to check that 23 NLOS paths 1442 exist.

According to an embodiment of the present disclosure, a UE or a BS may determine whether the number of effective NLOS paths 1432 or 1442 having a power value included in an effective NLOS path determination range 1438 or 1448 of each band included in multiple bands is smaller than a preset reference number of effective NLOS paths. The reference number of effective NLOS paths according to an embodiment of the present disclosure is a value that may be changed according to a radio wave environment, a communication system, or the like and may be preset by a user. Also, the reference number of effective NLOS paths may be set to be different with respect to respective channels. Alternatively, as another example, the reference number may be set to be the same value for each channel.

According to an embodiment of the present disclosure, a reference number ($n_{th,sub6GHz}$) of effective NLOS paths of a low frequency band (e.g., sub 6GHz) may be set to 5, and a reference number ($n_{th, mm\&THz}$) of effective NLOS paths of a high frequency band (e.g., above 6GHz) may be set to 24, but the value is not limited to an embodiment described above. As in FIG. 14C, the number ($n_{sub6G(h)}$) of effective NLOS paths 1432 of a low frequency band is 4 that is smaller than 5 that is the reference number ($n_{th,sub6G}$) of effective NLOS paths of the low frequency band, and the number ($n_{mm\&THz}(h)$) of effective NLOS paths 1442 of a high frequency band is 23 that is smaller than 24 that is the reference number ($n_{th, mm\&THz}$) of effective NLOS paths of the high frequency band. In this case, the UE or the BS may determine a corresponding channel as an LOS channel. (That is, $n_{sub6G(h)} < n_{th,sub6GHz}$ & $n_{mm\&THz}(h) < n_{th, mm\&THz}$) When the LOS channel is determined, the UE or the BS may perform the LOS channel operation 910.

<Second-3 embodiment>

According to the second-3 embodiment, a BS or a UE may determine the existence or non-existence of an LOS channel by using an RMS delay spread of a channel impulse response. First, a PDP and a channel response may be calculated via a statistical mean as in [Equation 8] below

$$[Equation\ 8]$$

$$P(\tau_k) = E[|h(\tau_k)|^2]$$

A mean excess delay calculated via the PDP may be calculated by using equation below.

$$[Equation\ 9]$$

$$\bar{\tau} = \frac{\sum_{k=1}^{L} \tau_k P(\tau_k)}{\sum_{k=1}^{L} P(\tau_k)} \ ,$$

where L indicates the number of effective delay channels.

By using the mean excess delay determined using [Equation 9], an RMS delay spread value $\sigma^\tau$ may be determined by using [Equation 10] below.

$$[Equation\ 10]$$

$$\sigma_\tau = \sqrt{\overline{\tau^2} - (\bar{\tau})^2}$$

The RMS delay spread value calculated by using [Equation 10] is a reference indicating how much tabs of delayed multi-path channels are distributed with reference to the mean. Therefore, when the RMS delay spread value is large, a distribution level is high, and when the RMS delay spread value is small, the distribution level is small to be concentrated on the mean. When an RMS delay spread value is calculated based on a PDP of a radio channel, it is possible to check that the value decreases in a case of an LOS channel, and the value increases in a case of an NLOS channel. Also, an RMS delay spread value varies depending on the number of received NLOS channels or reception power strengths even when they are same NLOS channels. Therefore, according to the second-3 embodiment, the BS or the UE may calculate a threshold delay spread value $\sigma^{th}$ in a target communication environment so as to previously obtain the threshold delay spread value. Then, the BS or the UE may compare the RMS delay spread value $\sigma^\tau$ calculated via each channel impulse response with the threshold delay spread value, thereby determining the existence or non-existence of an LOS channel. In the second-3 embodiment, an accuracy may be improved via multi-channel measurement. The second-3 embodiment will be described in detail with reference to FIG. 14.

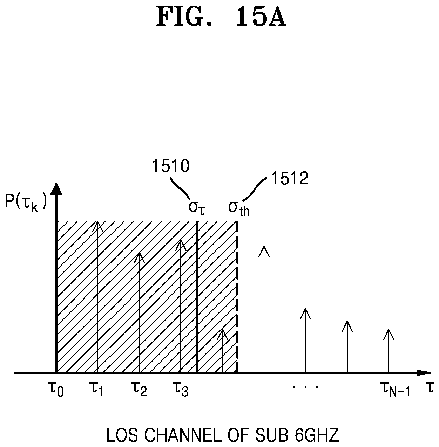

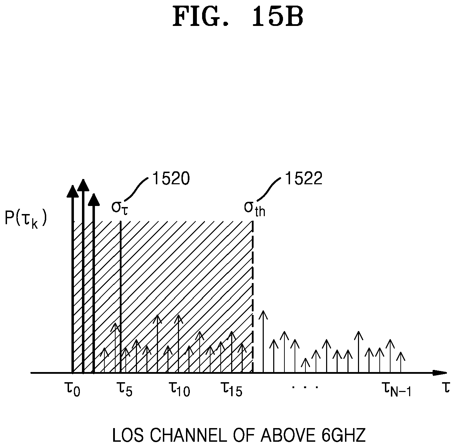

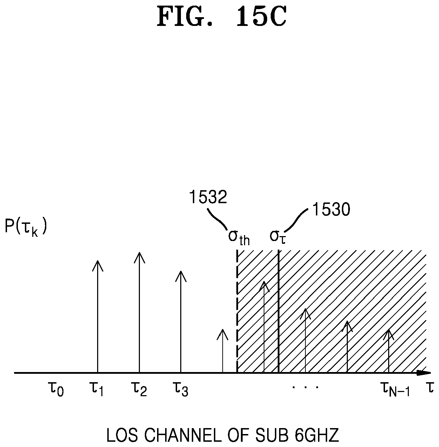

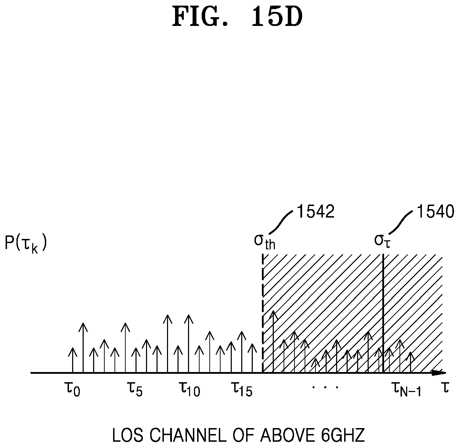

FIGS. 15A, 15B, 15C, and 15D are diagrams for describing power delay distributions and RMS delay spread results of LOS and NLOS channels, according to an embodiment of the present disclosure.

Referring to FIGS. 15A and 15C, as delay resolution deteriorates in a low frequency band (Sub 6 GHz), RMS delay spread values 1510 and 1530 calculated for an LOS channel and an NLOS channel are not greatly different from threshold delay spread values 1512 and 1532, such that an identification accuracy decreases. However, when a measurement result with respect to a high frequency band which is proposed in the present disclosure is used, as a loss of multiple bands is large and the number of multiple bands is decreased in the high frequency, a difference between an RMS delay spread value 1520 of an LOS channel and an RMS delay spread value 1540 of an NLOS channel is sharply increased. A characteristic of a high frequency band (above 6 GHz) may be referred to FIG. 1B. Therefore, when existence of an LOS channel is identified by using both a high frequency band and a low frequency band, an accuracy of determining the existence or non-existence of an LOS channel may be increased, compared to an existing case of identifying an LOS channel in a single frequency band. Also, there is an advantage in that a false alarm rate may be decreased via cross-verification of the high frequency band and the low frequency band.

When comparing FIG. 15A illustrating an LOS channel of a low frequency band with FIG. 15C illustrating an NLOS channel of a low frequency band, it is possible to check that the LOS channel has a smaller RMS delay spread value ($\sigma_\tau$) 1510. Also, when comparing FIG. 15B illustrating an LOS channel of a high frequency band with FIG. 15D illustrating an NLOS channel of a high frequency band, it is possible to check that the LOS channel has a smaller RMS delay spread value ($\sigma_\tau$) 1522.

Referring to FIG. 15A illustrating the LOS channel of the low frequency band, the BS or the UE according to an embodiment of the present disclosure may first determine a threshold delay spread value ($\sigma_{th}$) 1512 with respect to the low frequency band. Then, the BS or the UE may compare the RMS delay spread value ($\sigma_\tau$) 1510 determined via each channel impulse response with the threshold delay spread value 1512 in the low frequency band, and thus, may determine whether the RMS delay spread value ($\sigma_\tau$) 1510 is smaller than the threshold delay spread value ($\sigma_{th}$) 1512 with respect to the low frequency band.

Referring to FIG. 15B illustrating the LOS channel of the high frequency band, the BS according to an embodiment of the present disclosure may first determine a threshold delay spread value ($\sigma_{th}$) 1522 with respect to the high frequency band. Then, the BS or the UE may compare the RMS delay spread value ($\sigma_\tau$) 1520 determined via each channel impulse response with the threshold delay spread value ($\sigma_{th}$) 1522 in the high frequency band, and thus, may determine whether the RMS delay spread value ($\sigma_\tau$) 1520 is smaller than the threshold delay spread value ($\sigma_{th}$) 1522 with respect to the high frequency band.

According to an embodiment of the present disclosure, when the BS or the UE determines that the RMS delay spread value ($\sigma_\tau$) 1510 for the low frequency band is smaller than the threshold delay spread value 1512 of the low frequency band, and the RMS delay spread value ($\sigma_\tau$) 1520 for the high frequency band is smaller than the threshold delay spread value ($\sigma_{th}$) 1522 with respect to the high frequency band, the BS or the UE may determine a corresponding channel as an LOS channel. (That is, $\sigma_{RMS,sub6G} < \sigma_{th,sub6G}$ & $\sigma_{RM,mm\&THz} < \sigma_{th,mm\&THz}$) When the LOS channel is determined, the UE or the BS may perform the LOS channel operation 910 in the channel determined as the LOS channel.

<Third embodiment>

The LOS operation 910 of FIG. 9 may indicate an operation of improving performance of a mobile communication system by using a characteristic of an LOS channel when existence of the LOS channel is identified via at least one method among the first embodiment (operation 903), the second-1 embodiment, the second-2 embodiment, and the second-3 embodiment which are the methods of identifying an LOS channel described above. FIGS. 15 to 17 below illustrate embodiments in which, when an LOS channel is identified, a BS and a UE in the LOS channel perform an LOS operation by using a characteristic of a channel of an LOS. A method by which the BS and the UE operate by using an LOS may indicate performing of an operation according to at least one of a third-1 embodiment, a third-2 embodiment, or a third-3 embodiment, which are to be described below.

<Third-1 embodiment>

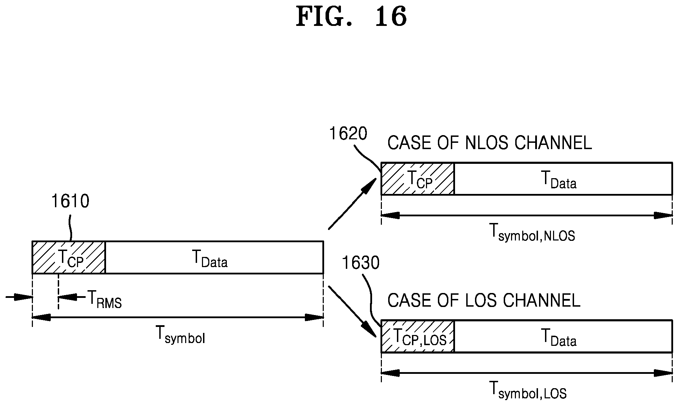

FIG. 16 illustrates a symbol design in a time domain according to the existence or non-existence of an LOS channel, according to an embodiment of the present disclosure.

According to an embodiment of the present disclosure, when an LOS channel exists, implementation of a symbol in which a size of a cyclic prefix (CP) 1630 is reduced as shown in FIG. 16 may be possible. For example, in the 5G communication system, in order to overcome an inter-symbol interference (ISI) due to a multi-band channel, an end portion of a symbol which corresponds to approximately 7% of a symbol length may be repeatedly used at a front portion of the symbol. Here, a ratio of a CP to the symbol length is referred to as a CP overhead. The more the CP overhead is increased, the more radio resources are wasted in a time domain. An element used to determine the CP overhead may be an RMS delay spread value of a radio channel. For example, a CP 1610 may be set to a length of three to five times the RMS delay spread value $\tau_{RMS}$. This is to assure a stable ISI-free environment as a delay length varies depending on a radio channel environment.

When an LOS channel is identified via the method of determining an LOS channel according to an embodiment of the present disclosure, an RMS delay spread value $\tau_{RMS}$ of the LOS channel may be decreased, and waste of the CP overhead may be prevented. However, as an LOS channel and an NLOS channel are changed due to movement of the UE or a change in a surrounding environment, it may be necessary to measure a multi-band channel by constantly transmitting and receiving a reference signal at regular intervals as shown in FIG. 9.

According to an embodiment of the present disclosure, a length of the CP 1630 used on a channel identified as an LOS channel may be determined by a user. As an example but not limited thereto, a CP with a length shorter than a legacy short CP may be used as the length of the CP 1630 may be used.

<Third-2 embodiment>

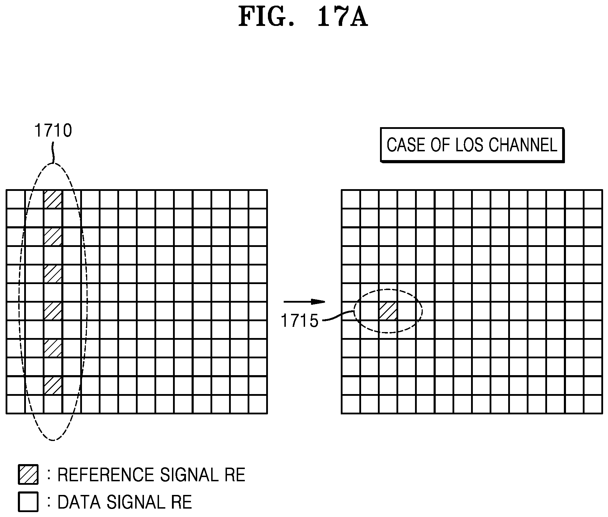

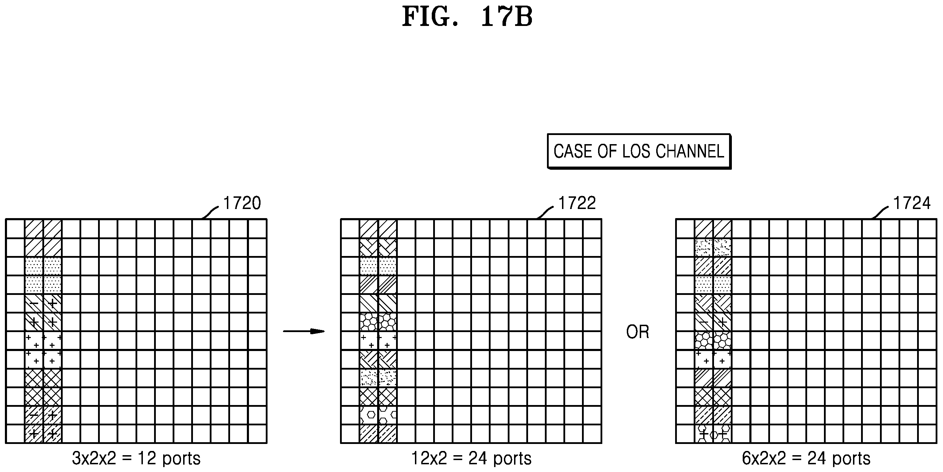

FIGS. 17A and 17B illustrate a method of decreasing a reference signal density and increasing multiplexing, depending on the existence or non-existence of an LOS channel, according to an embodiment of the present disclosure.

FIG. 17A illustrates a method of allocating a resource for reference signal transmission in an LOS channel environment, according to an embodiment of the present disclosure. In an LOS channel, only a single path of which reception power in a time domain is relatively large may exist. The above content may indicate that, when analyzed in a frequency domain, a uniform channel frequency response exists on an entire resource block (RB). Therefore, when the LOS channel is used, it is not necessary to measure a frequency response for the entire RB by densely allocating a reference signal in a frequency domain as in a legacy manner. When a reference signal is transmitted by using the LOS channel according to an embodiment of the present disclosure, channel measurement using a small number of resources may be possible, and saved resources may be used in data transmission.

Referring to FIG. 17A, six reference signal REs 1710 are allocated in an RB according to the related art, but in an LOS channel, one reference signal RE 1715 which is smaller than the related art is allocated in an RB. That is, when a BS transmits a DMRS to a UE by using the LOS channel, a density of the DMRS in an RB may be decreased. The number of reference signal REs in FIG. 17A is merely an embodiment, and thus, is not limited thereto.

FIG. 17B is a diagram for describing that reference signal transmission supporting more antenna ports than antenna ports according to the related art is possible in an LOS channel environment, according to an embodiment of the present disclosure. As shown in FIG. 17B, according to the related art, 12 antenna ports 1720 may be supported by using frequency division multiplexing (FDM), time division multiplexing (TDM), and code division multiplexing (CDM). As a reference signal density may be decreased in an LOS channel as described above, more resources may be allocated. For example but not limited thereto, a BS or a UE may transmit 24 antenna ports 1722 by using different REs in a frequency domain. As another example, the BS or the UE may apply the 24 antenna ports 1722 by applying CDM to two REs. That is, unlike the legacy scheme of transmitting 12 antenna ports 1720, 24 antenna ports 1722 or 1724 may be used when an LOS channel is used, and thus, a greater multiplexing capacity may be supported.

<Third-3 embodiment>

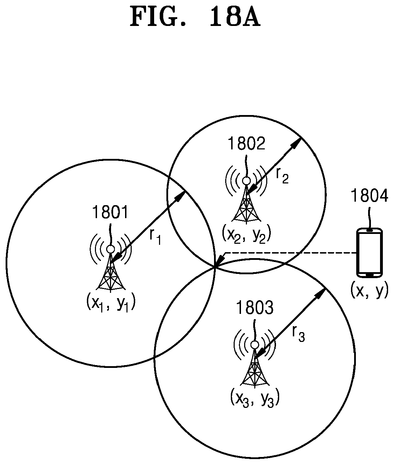

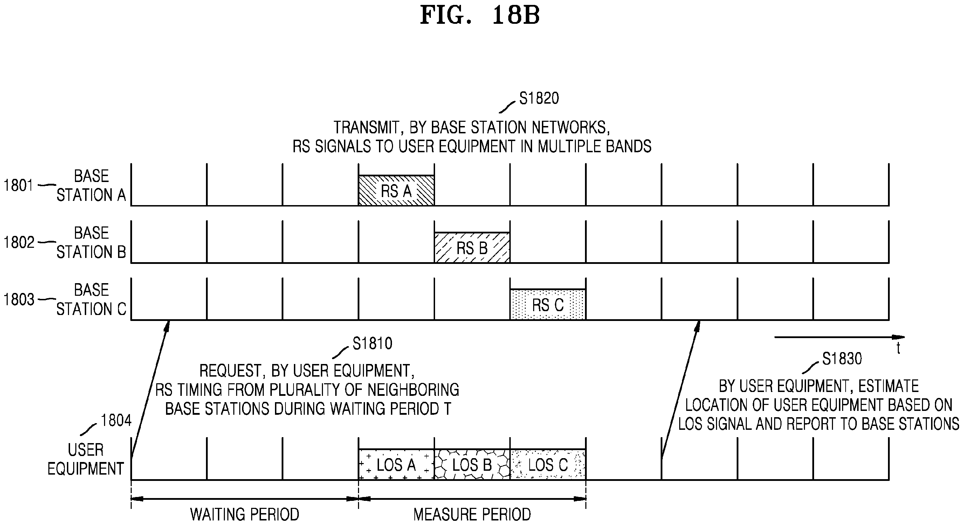

FIGS. 18A and 18B illustrate an embodiment of a method of measuring a location of a UE, according to an embodiment of the present disclosure. FIGS. 18A and 18B illustrate a method by which a UE 1804 and neighboring BSs 1801, 1802, and 1803 determine the existence or non-existence of an LOS channel by transmitting and receiving signals, so as to estimate a location of the UE 1804, according to an embodiment of the present disclosure.

Referring to FIG. 18A, the UE 1804 according to an embodiment of the present disclosure may estimate a channel via a reference signal RS received from the neighboring BSs 1801, 1802, and 1803 with which transmission and reception is possible. The UE 1804 may estimate a location of the UE 1804 via trilateration by calculating a delay time when a corresponding channel is an LOS channel.

Referring to FIG. 18B, in operation S1810, the UE 1804 may request RS timing from a plurality of BSs located near the UE 1804, during a waiting period. In order to measure a location of the UE 1804 in an LOS channel environment, the UE 1804 may first request neighboring BSs that are a BS A 1801, a BS B 1802, and a BS C 1803 for transmission of a reference signal for measuring the existence or non-existence of an LOS channel. For convenience of descriptions, FIGS. 18A and 18B illustrate a case, assuming that three BSs exist around the UE 1804. However, this is merely an example, and a plurality of BSs may exist around the UE 1804. The UE 1804 may request reference signal transmission from a plurality of neighboring BSs to which a request of the reference signal transmission is available. In particular, when communication is performed by using a high frequency band, it is expected that more BSs may exist around the UE 1804.

In operation S1820, the UE 1804 may receive reference signals respectively from the plurality of BSs. According to an embodiment of the present disclosure, when the BSs 1801, 1802, and 1803 are around the UE 1804 and are connected with each other, the BSs 1801, 1802, and 1803 may transmit, to the UE 1804 and in a measurement period, reference signals in order that the reference signals requested from the UE 1804 are not simultaneously transmitted.

In operation S1830, the UE 1804 may select only a reference signal for an LOS channel from among reference signals received via at least one neighboring BS. Also, the UE 1804 may identify the existence or non-existence of an LOS channel, based on the selected reference signal, and may report identification result information about the LOS channel to the BS. According to an embodiment of the present disclosure, the UE 1804 may determine whether channels with respective BSs are LOS channels, based on the reference signals received from the plurality of BSs. Based on the determination, the UE 1804 may select at least three BSs (e.g., the BS A 1801, the BS B 1802, and the BS C 1803) having LOS channels. Also, the UE 1804 may also determine how much signals LOS A, LOS B, and LOS C received from BSs with which LOS channels are established are delayed and received. The UE 1804 may determine a location of the UE 1804, based on the signals LOS A, LOS B, and LOS C received from the BSs with which LOS channels are established, and may report the location to the BSs. According to an embodiment of the present disclosure, the UE 1804 may transmit identification result information about LOS channels to the BS A 1801, the BS B 1802, and the BS C 1803 with which the LOS channels are established. The identification result information about LOS channels which is transmitted to the BS A 1801, the BS B 1802, and the BS C 1803 may include information indicating that it is identified that LOS channels exist between the UE and the BSs. Also, in a case where the UE 1804 transmits identification result information about LOS channels to other BSs with which the LOS channel are established, the identification result information about LOS channels may include information indicating that it is identified that LOS channels do not exist (i.e., NLOS channels exist) between the UE and the BSs.

Via the embodiment, the UE 1804 or the BSs 1801, 1802, and 1803 which cooperatively communicate with each other may identify the existence or non-existence of an LOS channel and may estimate the location of the UE 1804.

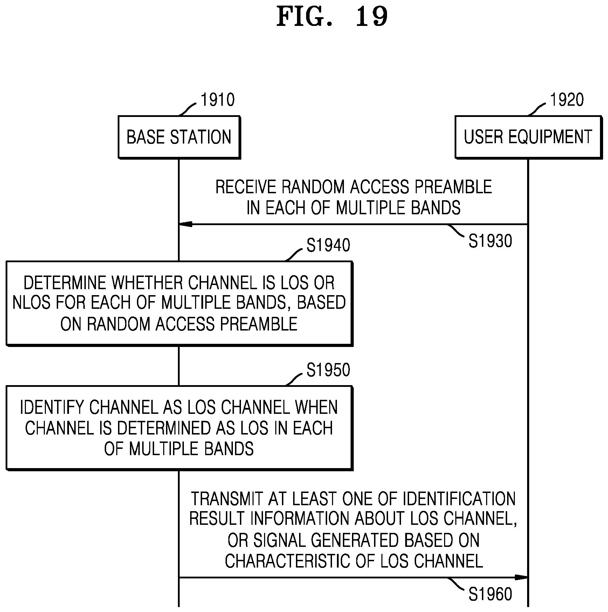

FIG. 19 illustrates a data transmission and reception flowchart of a method by which a BS identifies an LOS channel based on a random access preamble, according to an embodiment of the present disclosure.

FIG. 19 illustrates a flowchart of the first embodiment, and redundant descriptions are omitted. In operation S1930, a BS 1910 may receive a random access preamble in each of multiple bands from a UE 1920. In operation S1940, the BS 1910 may determine whether a channel is an LOS or an NLOS for each of the multiple bands, based on the random access preamble. In operation S1950, when the channel is determined as the LOS in each of the multiple bands, the BS 1910 may identify the channel as an LOS channel.

In operation S1960, the BS 1910 may transmit, to the UE 1920, at least one of identification result information about the LOS channel, or a signal generated based on a characteristic of the LOS channel. In operation S1960, when it is determined that the LOS channel exists, the BS 1910 may perform an LOS channel operation according to at least one of the third-1 embodiment, the third-2 embodiment, or the third-3 embodiment described above.

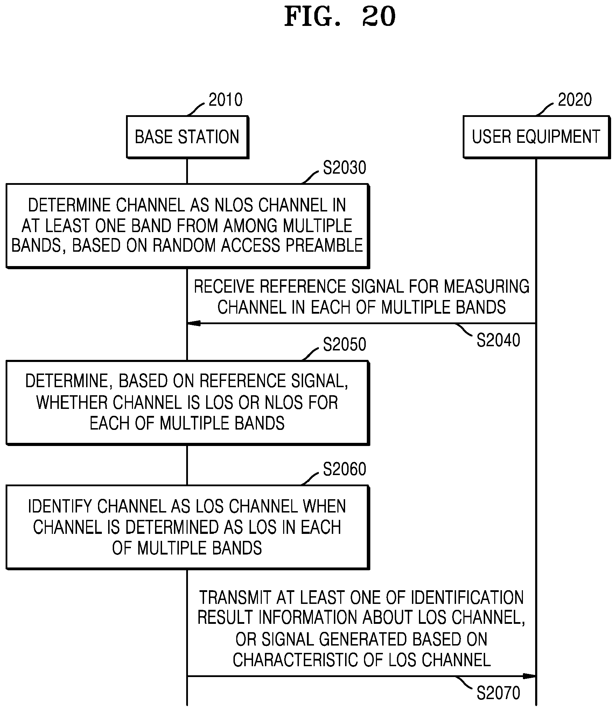

FIG. 20 illustrates a data transmission and reception flowchart of a method by which a BS identifies an LOS channel based on a reference signal received from a UE, according to an embodiment of the present disclosure.

FIG. 20 illustrates a flowchart of the second embodiment (including the second-1 embodiment, the second-2 embodiment, and the second-3 embodiment), and redundant descriptions are omitted. In operation S2030, a BS 2010 may determine a channel as an NLOS channel in at least one band from among multiple bands, based on a random access preamble. In operation S2040, the BS 2010 may receive, from a UE 2020, a reference signal for measuring a channel in each of the multiple bands. In operation S2050, the BS 2010 may determine, based on the reference signal, whether the channel is an LOS or an NLOS for each of the multiple bands. In operation S2060, when the channel is determined as the LOS in each of the multiple bands, the BS 2010 may identify the channel as an LOS channel.

In operation S2070, the BS 2010 may transmit, to the UE 2020, at least one of identification result information about the LOS channel, or a signal generated based on a characteristic of the LOS channel. In operation S2070, when it is determined that the LOS channel exists, the BS 1910 may perform an LOS channel operation according to at least one of the third-1 embodiment, the third-2 embodiment, or the third-3 embodiment described above.

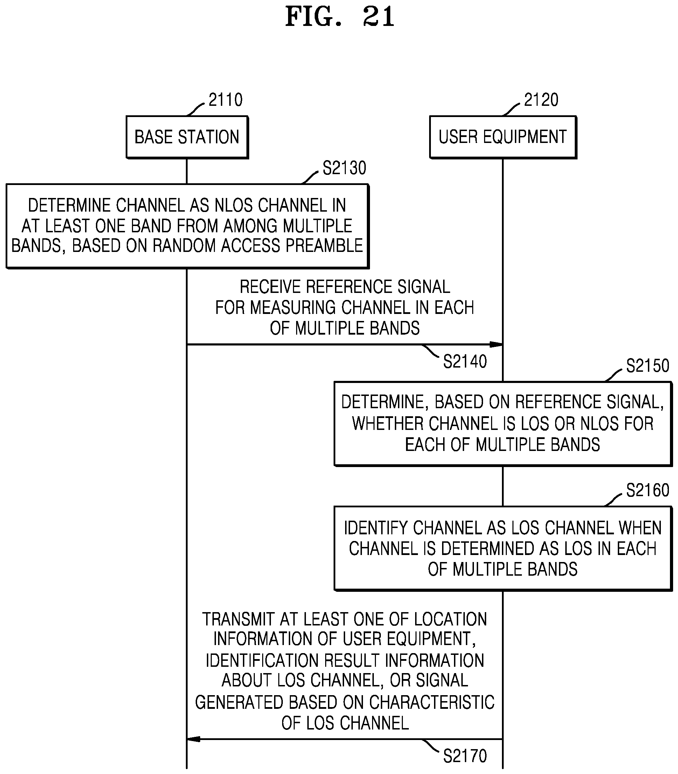

FIG. 21 illustrates a data transmission and reception flowchart of a method by which a UE identifies an LOS channel based on a reference signal received from a BS, according to an embodiment of the present disclosure.

FIG. 21 illustrates a flowchart of the second embodiment (including the second-1 embodiment, the second-2 embodiment, and the second-3 embodiment), and redundant descriptions are omitted. In operation S2130, a BS 2110 may determine a channel as an NLOS channel in at least one band from among multiple bands, based on a random access preamble. In operation S2140, a UE 2120 may receive, from the BS 2110, a reference signal for measuring a channel in each of the multiple bands. In operation S2150, the UE 2120 may determine, based on the reference signal, whether the channel is an LOS or an NLOS for each of the multiple bands. In operation S2160, when the channel is determined as the LOS in each of the multiple bands, the UE 2120 may identify the channel as an LOS channel.

In operation S2170, the UE 2120 may transmit, to the BS 2110, at least one of location information of the UE, identification result information about the LOS channel, or a signal generated based on a characteristic of the LOS channel. In operation S2170, when it is determined that the LOS channel exists, the UE 2120 may perform an LOS channel operation according to at least one of the third-1 embodiment, the third-2 embodiment, or the third-3 embodiment described above.

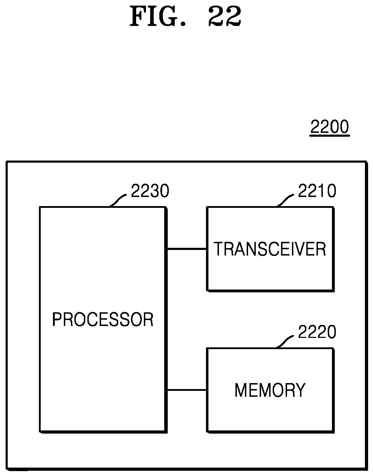

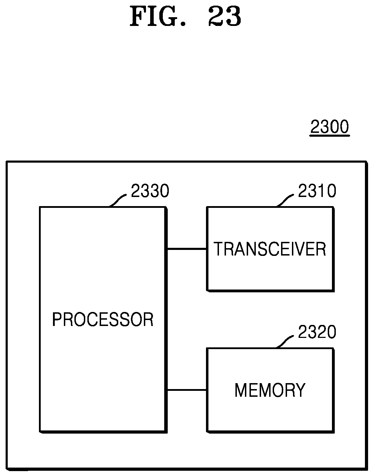

A transmitter, a receiver, and a controller of a UE and BS to perform the embodiments of the present disclosure are illustrated in each of FIGS. 22 and 23. Transceiving methods of the BS and UE for applying a method of transmitting and receiving a DL control channel and a data channel in a communication system corresponding to the embodiment are shown, and in order to perform them, the transceiver, the processor, or the like of the BS and UE may each operate according to the embodiments.

FIG. 22 is a block diagram illustrating a structure of a UE according to an embodiment of the present disclosure.

Referring to FIG. 22, a UE 2200 may include a transceiver 2210, a memory 2220, and a processor 2230. According to the communication method of the UE described above, the transceiver 2210, the processor 2230, and the memory 2220 of the UE 2200 may operate. However, elements of the UE 2200 are not limited to the example above. For example, the UE 2200 may include more elements than those described above or may include fewer elements than those described above. In addition, the transceiver 2210, the processor 2230, and the memory 2220 may be implemented as one chip. Also, the processor 2230 may include one or more processors.

The transceiver 2210 collectively refers to a receiver of the UE 2200 and a transmitter of the UE, and may transmit or receive signals to or from a network entity, a BS, or another UE. The signals being transmitted or received to or from the network entity, the BS, or the other UE may include control information and data. To this end, the transceiver 2210 may include a radio frequency (RF) transmitter for up-converting and amplifying a frequency of signals to be transmitted, and an RF receiver for low-noise-amplifying and down-converting a frequency of received signals. However, this is merely an example of the transceiver 2210, and elements of the transceiver 2210 are not limited to the RF transmitter and the RF receiver.

Also, the transceiver 2210 may receive signals via wireless channels and output the signals to the processor 2230, and may transmit signals output from the processor 2230, via wireless channels.

The memory 2220 may store programs and data required for the UE 2200 to operate. Also, the memory 2220 may store control information or data included in a signal obtained by the UE. The memory 2220 may include any or a combination of storage media such as read-only memory (ROM), random access memory (RAM), a hard disk, a compact disc (CD)-ROM, a digital versatile disc (DVD), or the like. Also, the memory 2220 may not be separately provided but may be included in the processor 2230.

Also, the processor 2230 may control a series of processes to allow the UE 2200 to operate according to the embodiments of the present disclosure. For example, the processor 2230 may receive a control signal and a data signal via the transceiver 2210, and may process the received control signal and data signal. Also, the processor 2230 may transmit the processed control signal and data signal via the transceiver 2210.

According to an embodiment of the present disclosure, the processor 2230 may receive, from a BS, a signal for measuring a channel in each of multiple bands, and may determine whether the channel is an LOS channel for each of the multiple bands. The processor 2230 may identify the channel is an LOS channel, in response to a determination that the LOS channel exists in each of the multiple bands, and may transmit data to the BS, based on the LOS channel.

FIG. 23 is a block diagram illustrating a structure of a BS according to an embodiment of the present disclosure.

Referring to FIG. 23, a BS 2300 may include a transceiver 2310, a memory 2320, and a processor 2330. According to the communication method of the BS described above, the transceiver 2310, the processor 2330, and the memory 2320 of the BS may operate. However, elements of the BS 2300 are not limited to the example above. For example, the BS 2300 may include more elements than those described above or may include fewer elements than those described above. In addition, the transceiver 2310, the processor 2330, and the memory 2320 may be implemented as one chip. Also, the processor 2330 may include one or more processors.

The transceiver 2310 collectively refers to a receiver of the BS 2300 and a transmitter of the BS, and may transmit or receive signals to or from a network entity, a UE, or another BS. The signals being transmitted or received to or from the network entity, the other BS, or the UE may include control information and data. To this end, the transceiver 2310 may include a RF transmitter for up-converting and amplifying a frequency of signals to be transmitted, and an RF receiver for low-noise-amplifying and down-converting a frequency of received signals. However, this is merely an example of the transceiver 2310, and elements of the transceiver 2310 are not limited to the RF transmitter and the RF receiver.

Also, the transceiver 2310 may receive signals via wireless channels and output the signals to the processor 2330, and may transmit signals output from the processor 2330, via wireless channels.

The memory 2320 may store programs and data required for the BS 2300 to operate. Also, the memory 2320 may store control information or data included in a signal obtained by the BS 2300. The memory 2320 may include any or a combination of storage media such as ROM, RAM, a hard disk, a CD-ROM, a DVD, or the like. Also, the memory 2320 may not be separately provided but may be included in the processor 2330.

Also, the processor 2330 may control a series of processes to allow the BS 2300 to operate according to the embodiments of the present disclosure. For example, the processor 2330 may receive a control signal and a data signal via the transceiver 2310, and may process the received control signal and data signal. Also, the processor 2330 may transmit the processed control signal and data signal via the transceiver 2310.

According to an embodiment of the present disclosure, a processor 2330 may control a transceiver 2310 to receive, from a UE, a signal for measuring a channel in each of multiple bands, and may determine, based on the signal, whether the channel is an LOS channel for each of the multiple bands. Also, the processor 2330 may identify the channel as the LOS channel, in response to a determination that the LOS channel exists in each of the multiple bands, and may control the transceiver 2310 to transmit data to the UE, based on the LOS channel.

According to an embodiment of the present disclosure, the processor 2330 may control the transceiver 2310 to receive a random access preamble in each of the multiple bands, and may determine whether the channel is the LOS channel, based on a reception power of the random access preamble received in each of the multiple bands and a threshold power value of a frequency band in which the random access preamble is received.

Accordingly, the aforementioned embodiments may be written into a program that may be executed by a computer, and may be implemented in a general-purpose digital computer for carrying out the program by using a computer-readable recording medium. In addition, a data structure used in the embodiments can be written in a computer-readable recording medium through various means. The embodiments may be embodied as a computer program product including a recording medium, e.g., a program module to be executed in computers, which includes computer-readable instructions. For example, methods that are implemented as software modules or algorithms may be stored as computer readable codes or program commands executable on a computer-readable recording medium.

A computer-readable medium may be any recording medium that may be accessed by computers, and may include volatile and non-volatile medium, and detachable and non-detachable medium. Examples of the computer-readable medium include, but are not limited to, magnetic storage media, e.g., a read-only memory (ROM), a floppy disk, a hard disk, etc., optical recording media, e.g., a compact disc read only memory (CD-ROM), a digital versatile disc (DVD), etc. Also, the computer-readable medium may include a computer storage medium and a communication medium.

In addition, a plurality of computer-readable recording media may be distributed over network coupled computer systems, and data stored in the distributed recording media, e.g., a program instruction and code, may be executed by using at least one computer.

A machine-readable storage medium may be provided in the form of a non-transitory storage medium. Here, the term 'non-transitory storage medium' may mean that the storage medium is a tangible device and does not include signals (e.g., electromagnetic waves), and may mean that data may be permanently or temporarily stored in the storage medium. For example, the 'non-transitory storage medium' may include a buffer in which data is temporarily stored.

According to an embodiment, the method according to various embodiments of the present document may be included and provided in a computer program product. The computer program product may be traded as a product between a seller and a buyer.

The computer program product may be distributed in the form of a machine-readable storage medium (e.g., a compact disc read only memory (CD-ROM)) or may be distributed (e.g., downloaded or uploaded) online through an application store (e.g., Play Store™) or directly between two user apparatuses (e.g., smartphones). In a case of online distribution, at least a portion of the computer program product (e.g., a downloadable application) may be at least temporarily stored or temporarily generated in a machine-readable storage medium such as a manufacturer's server, a server of an application store, or a memory of a relay server.

While an embodiment of the present disclosure has been particularly shown and described with reference to the accompanying drawings, it is obvious to one of ordinary skill in the art that the present disclosure may be easily embodied in many different forms without changing the technical concept or essential features of the present disclosure. Thus, it should be understood that the embodiments described herein should be considered in a descriptive sense only and not for purposes of limitation.

While one or more embodiments have been described above with reference to the specification and drawings, the embodiments are for the purpose of promoting an understanding of the present disclosure only and are not intended to be limiting the scope of the present disclosure. In other words, it will be apparent to one of ordinary skill in the art that other modifications based on the technical ideas of the present disclosure are feasible. Also, the embodiments may be combined to be implemented, when required.

**Claims**

1.  A method of identifying, by a base station (BS), a line-of-sight (LOS) channel in a wireless communication system, the method comprising:

    receiving, from a user equipment (UE), a reference signal for measuring a channel in each of multiple bands;
    determining, based on the reference signal, whether the channel is an LOS or a non-line-of-sight (NLOS) in each of the multiple bands;
    when the channel is determined as the LOS in each of the multiple bands, identifying the channel as the LOS channel; and
    transmitting, to the UE, at least one of identification result information about the LOS channel, or a signal generated based on a characteristic of the LOS channel.

2. The method of claim 1, further comprising:

    receiving, from the UE, a random access preamble in each of the multiple bands; and
    determining whether the channel is an LOS or an NLOS with respect to each of the multiple bands, based on the random access preamble received in each of the multiple bands,
    wherein the receiving, from the UE, of the reference signal for measuring the channel in each of the multiple bands comprises:
    when a channel is determined as an NLOS in at least one of the multiple bands, based on the random access preamble, receiving the reference signal for measuring the channel in each of the multiple bands.

3. The method of claim 2, wherein the determining of whether the channel is the LOS or the NLOS with respect to each of the multiple bands, based on the random access preamble, comprises:

    identifying a minimum propagation distance between the UE and the BS, based on the random access preamble;
    determining a reception power of the random access preamble, based on the minimum propagation distance; and
    based on the reception power of the random access preamble received in each of the multiple bands, and a threshold power value of a frequency band in which the random access preamble is received, determining whether the channel is the LOS or the NLOS.

4. The method of claim 2, wherein the determining of whether the channel is the LOS or the NLOS with respect to each of the multiple bands, based on the random access preamble, comprises:
    when a reception power of a random access preamble received in a first frequency band is greater than a threshold power value of the first frequency band, and a reception power of a random access preamble received in a second frequency band is greater than a threshold power value of the second frequency band, determining the channel as the LOS channel.

5. The method of claim 1, wherein the determining of, based on the reference signal, whether the channel is the LOS or the NLOS in each of the multiple bands comprises:

    determining a delay power value of a reference signal received in a first frequency band, based on a channel impulse response of the reference signal received in the first frequency band; and
    determining a delay power value of a reference signal received in a second frequency band, based on a channel impulse response of the reference signal received in the second frequency band, and
    wherein the identifying of the channel as the LOS channel comprises:
    when the delay power value of the reference signal received in the first frequency band is greater than a threshold power value determined for the first frequency band, and the delay power value of the reference signal received in the second frequency band is greater than a threshold power value determined for the second frequency band, determining the channel as the LOS channel.

6. The method of claim 1, wherein the determining of, based on the reference signal, whether the channel is the LOS or the NLOS in each of the multiple bands comprises:

    based on a channel impulse response of a reference signal received in a first frequency band, determining first effective NLOSs as paths having a power value corresponding to a difference value between a maximum reception delay power value of the reference signal received in the first frequency band and a threshold power value; and
    based on a channel impulse response of a reference signal received in a second frequency band, determining second effective NLOSs as paths having a power value corresponding to a difference value between a maximum reception delay power value of the reference signal received in the second frequency band and a threshold power value, and
    wherein the identifying of the channel as the LOS channel comprises:
    when the number of the first effective NLOSs is smaller than a reference number of effective NLOSs determined for the first frequency band, and the number of the second effective NLOSs is smaller than a reference number of effective NLOSs determined for the second frequency band, identifying the channel as the LOS channel.

7. The method of claim 1, wherein the determining of, based on the reference signal, whether the channel is the LOS or the NLOS in each of the multiple bands comprises:

determining, based on a channel impulse response of a reference signal received in a first frequency band, a first root mean squared (RMS) delay spread value of the reference signal received in the first frequency band; and determining, based on a channel impulse response of a reference signal received in a second frequency band, a second RMS delay spread value of the reference signal received in the second frequency band, and wherein the identifying of the channel as the LOS channel comprises: when the first RMS delay spread value is smaller than a reference delay spread value for the first frequency band, and the second RMS delay spread value is smaller than a reference delay spread value for the second frequency band, determining the channel as the LOS channel.

8. The method of claim 1, wherein the transmitting of, to the UE, at least one of location information of the UE, the identification result information about the LOS channel, or the signal generated based on the characteristic of the LOS channel comprises:

determining a value of at least one of a cyclic prefix (CP) size or a reference signal density, based on the characteristic of the LOS channel; generating data or a signal comprising the reference signal, based on the determined value; and transmitting the signal to the UE.

9. The method of claim 1, further comprising:

receiving, from the UE, a reference signal request for measuring a location of the UE; transmitting, to the UE, a reference signal for measuring a location of the UE; and receiving, from the UE, information about existence or non-existence of an LOS channel between the UE and the BS, and location information of the UE, based on the reference signal for measuring the location of the UE, wherein existence or non-existence of the LOS channel and the location information of the UE are determined based on the reference signal.

10. The method of claim 1, wherein

a resource for transmitting the reference signal for measuring the channel in each of the multiple bands is determined based on whether multi-band uplink simultaneous transmission is possible for the UE with respect to each of the multiple bands, and whether the multi-band uplink simultaneous transmission is possible for the UE with respect to each of the multiple bands is determined based on UE capability information.

11. The method of claim 1, wherein

the multiple bands comprise at least two frequency bands that are separate by a value greater than a preset frequency difference, and the preset frequency difference is determined based on at least one of a pathloss exponent with respect to each of the multiple bands, a shadowing value, or a frequency value of a carrier with respect to each of the multiple bands.

12. A method of identifying, by a user equipment (UE), a line-of-sight (LOS) channel in a wireless communication system, the method comprising:

receiving, from a base station (BS), a reference signal for measuring a channel in each of multiple bands; determining, based on the reference signal, whether the channel is an LOS or a non-line-of-sight (NLOS) in each of the multiple bands; when the channel is determined as the LOS in each of the multiple bands, identifying the channel as the LOS channel; and transmitting, to the BS, at least one of location information of the UE, identification result information about the LOS channel, or a signal generated based on a characteristic of the LOS channel.

13. The method of claim 12, further comprising:

transmitting, to the BS, a random access preamble in each of the multiple bands,
wherein the receiving, from the BS, of the reference signal for measuring the channel in each of multiple bands comprises:
when a channel is determined as the NLOS in at least one band of the multiple bands, based on the random access preamble, receiving the reference signal for measuring the channel in each of the multiple bands.

14. The method of claim 12, wherein the determining of, based on the reference signal, whether the channel is the LOS or the NLOS in each of the multiple bands comprises:

determining a delay power value of a reference signal received in a first frequency band, based on a channel impulse response of the reference signal received in the first frequency band; and
determining a delay power value of a reference signal received in a second frequency band, based on a channel impulse response of the reference signal received in the second frequency band, and
wherein the identifying of the channel as the LOS channel comprises:
when a delay power value of a reference signal received in the first frequency band is greater than a threshold power value determined for the first frequency band, and a delay power value of a reference signal received in the second frequency band is greater than a threshold power value determined for the second frequency band, determining the channel as the LOS channel.

15. A base station (BS) configured to identify a line-of-sight (LOS) channel in a wireless communication system, the BS comprising:

a transceiver; and
a processor,
wherein the processor is configured to:

control the transceiver to receive, from a user equipment (UE), a reference signal for measuring a channel in each of multiple bands;
determine, based on the reference signal, whether the channel is an LOS or a non-line-of-sight (NLOS) in each of the multiple bands;
when the channel is determined as the LOS in each of the multiple bands, identify the channel as the LOS channel; and
control the transceiver to transmit, to the UE, at least one of location information of the UE, identification result information about the LOS channel, or a signal generated based on a characteristic of the LOS channel.

# FIG. 1

# FIG. 2

# FIG. 3

1 SYMBOL —301

302
12
SUBCARRIERS

DMRS —305

REG —303

CCE —304

# FIG. 4

CONTROL RESOURCE SET DURATION —404

403
SUBBAND

SYSTEM BANDWIDTH
—410

SLOT
420

FREQUENCY

TIME

CONTROL RESOURCE SET#1 —401

CONTROL RESOURCE SET#2 —402

FIG. 5

1 RB
= 12 SUBCARRIERS

1 SLOT (OR SUBFRAME) = 14 OFDM SYMBOLS

1 SUBCARRIER WITH SUBCARRIER SPACING ΔF

PDCCH REs — 501

DMRS REs — 502

PDSCH Res — 503

EP 4 325 750 A1

FIG. 6

# FIG. 7

START

RECEIVE, FROM BASE STATION, REFERENCE SIGNAL FOR MEASURING CHANNEL IN EACH OF MULTIPLE BANDS —— S710

DETERMINE, BASED ON REFERENCE SIGNAL, WHETHER THE CHANNEL IS LOS OR NLOS IN EACH OF THE MULTIPLE BANDS —— S720

WHEN CORRESPONDING CHANNEL IS DETERMINED AS LOS IN EACH OF MULTIPLE BANDS, IDENTIFY CHANNEL AS LOS CHANNEL —— S730

TRANSMIT AT LEAST ONE OF IDENTIFICATION RESULT INFORMATION ABOUT LOS CHANNEL, OR SIGNAL GENERATED BASED ON CHARACTERISTIC OF LOS CHANNEL —— S740

END

# FIG. 8

START

RECEIVE, FROM BASE STATION, REFERENCE SIGNAL FOR MEASURING CHANNEL IN EACH OF MULTIPLE BANDS ⟍S810

DETERMINE, BASED ON REFERENCE SIGNAL, WHETHER CHANNEL IS LOS OR NLOS IN EACH OF MULTIPLE BANDS ⟍S820

WHEN CHANNEL IS DETERMINED AS LOS IN EACH OF MULTIPLE BANDS, IDENTIFY CHANNEL AS LOS CHANNEL ⟍S830

TRANSMIT AT LEAST ONE OF LOCATION INFORMATION OF USER EQUIPMENT, IDENTIFICATION RESULT INFORMATION ABOUT LOS CHANNEL, OR SIGNAL GENERATED BASED ON CHARACTERISTIC OF LOS CHANNEL ⟍S840

END

# FIG. 9

START

SSB SYNCHRONIZATION ⟋901

CALCULATE MINIMUM DELAY TIME ($\tau_{min}$) BETWEEN USER EQUIPMENT AND BASE STATION, IN MULTI-BAND RACH PROCESS ⟋902

DETERMINE WHETHER RECEPTION POWERS OF MULTIPLE ARE GREATER THAN THRESHOLD POWER VALUES OF MULTIPLE BANDS ($P(d_{est}) > P_{th,sub6G}$ & $P(d_{est}) > P_{th,mm\&THz}$) ⟋903

NO

YES

RECEIVE REFERENCE SIGNAL FOR MEASURING CHANNEL IN MULTIPLE BANDS ($\hat{H}(f)$) ⟋904

$\hat{h}[n] = IFFT\{\hat{H}(f)\}$

DETERMINE CHANNEL IMPULSE RESPONSE WITH RESPECT TO REFERENCE SIGNAL RECEIVED IN EACH BAND ($h_{sub6G}(\tau_k)$ & $h_{mm\&THz}(\tau_k)$) ⟋905

DETERMINE WHETHER LOS CHANNEL EXISTS, BY USING CHANNEL IMPULSE RESPONSE WITH RESPECT TO REFERENCE SIGNAL RECEIVED IN EACH BAND ⟋906

YES

NO

LOS OPERATION (LINE-OF-SIGHT CHANNEL OPERATION) ⟋910

NLOS OPERATION (NON-LINE-OF-SIGHT CHANNEL OPERATION) ⟋908

EP 4 325 750 A1

# FIG. 10A

EP 4 325 750 A1

# FIG. 10B

PRACH Preamble — 1050

1052          1054          1056

CP=0.1ms          Data          Guard time

FIG. 11A

# FIG. 11B

# FIG. 12A

Indoor Omnidirectional Path Loss Models V–V Polarization

| | |
|---|---|
| □ | 28 GHz LOS Path Loss |
| △ | 28 GHz NLOS Path Loss |
| ○ | 73 GHz LOS Path Loss |
| ◇ | 73 GHz NLOS Path Loss |
| ——— | $n_{28G\,LOS}$=1.1, $\sigma_{28G\,LOS}$ = 1.7 dB |
| —·— | $n_{28G\,NLOS}$=2.7, $\sigma_{28G\,NLOS}$ = 9.6 dB |
| ——— | $n_{73G\,LOS}$=1.3, $\sigma_{73G\,LOS}$ = 1.9 dB |
| - - - - | $n_{73G\,NLOS}$=3.2, $\sigma_{73G\,NLOS}$ = 11.3 dB |

# FIG. 12B

Indoor Omnidirectional Path Loss Models V-H Polarization

Legend:
- □ 28 GHz LOS Path Loss
- △ 28 GHz NLOS Path Loss
- ○ 73 GHz LOS Path Loss
- ◇ 73 GHz NLOS Path Loss
- —— $n_{28G\ LOS} = 2.5$, $\sigma_{28G\ LOS} = 3.0$ dB
- —·— $n_{28G\ NLOS} = 3.6$, $\sigma_{28G\ NLOS} = 9.4$ dB
- —— $n_{73G\ LOS} = 3.5$, $\sigma_{73G\ LOS} = 6.3$ dB
- ——— $n_{73G\ NLOS} = 4.6$, $\sigma_{73G\ NLOS} = 9.7$ dB

# FIG. 13A

1310

$P(\tau_k)$

Threshold) $P_{th}(d)$ — 1315

$\tau_0$   $\tau_1$   $\tau_2$   $\tau_3$   $\cdots$   $\tau_{N-1}$   $\tau$

LOS CHANNEL

$P(\tau_k)$

$\tau_0$   $\tau_1$   $\tau_2$   $\tau_3$   $\cdots$   $\tau_{N-1}$   $\tau$

NLOS CHANNEL

EP 4 325 750 A1

# FIG. 13B

LOS CHANNEL OF SUB 6GHZ (LARGE Δτ)

# FIG. 13C

LOS CHANNEL OF ABOVE 6GHZ (SMALL $\Delta\tau$)

# FIG. 14A

LOS CHANNEL

# FIG. 14B

NLOS CHANNEL

# FIG. 14C

LOS CHANNEL OF SUB 6GHZ (LARGE $\Delta\tau$)

# FIG. 14D

LOS CHANNEL OF ABOVE 6GHZ (SMALL Δτ)

# FIG. 15A

LOS CHANNEL OF SUB 6GHZ

# FIG. 15B

LOS CHANNEL OF ABOVE 6GHZ

# FIG. 15C

LOS CHANNEL OF SUB 6GHZ

FIG. 15D

LOS CHANNEL OF ABOVE 6GHZ

# FIG. 16

# FIG. 17A

1710

CASE OF LOS CHANNEL

1715

▨ : REFERENCE SIGNAL RE
☐ : DATA SIGNAL RE

# FIG. 17B

CASE OF LOS CHANNEL

1720

3x2x2 = 12 ports

1722

12x2 = 24 ports

OR

1724

6x2x2 = 24 ports

# FIG. 18A

# FIG. 18B

S1820
TRANSMIT, BY BASE STATION NETWORKS,
RS SIGNALS TO USER EQUIPMENT IN MULTIPLE BANDS

1801 — BASE STATION A | RS A

1802 — BASE STATION B | RS B

1803 — BASE STATION C | RS C

S1810
REQUEST, BY USER EQUIPMENT,
RS TIMING FROM PLURALITY OF NEIGHBORING
BASE STATIONS DURING WAITING PERIOD T

1804
USER EQUIPMENT | LOS A | LOS B | LOS C

WAITING PERIOD | MEASURE PERIOD

S1830
BY USER EQUIPMENT, ESTIMATE
LOCATION OF USER EQUIPMENT BASED ON
LOS SIGNAL AND REPORT TO BASE STATIONS

EP 4 325 750 A1

# FIG. 19

1910

1920

| BASE STATION | USER EQUIPMENT |

RECEIVE RANDOM ACCESS PREAMBLE
IN EACH OF MULTIPLE BANDS

S1930

S1940

DETERMINE WHETHER CHANNEL IS LOS OR
NLOS FOR EACH OF MULTIPLE BANDS, BASED
ON RANDOM ACCESS PREAMBLE

S1950

IDENTIFY CHANNEL AS LOS CHANNEL WHEN
CHANNEL IS DETERMINED AS LOS IN EACH
OF MULTIPLE BANDS

TRANSMIT AT LEAST ONE OF IDENTIFICATION
RESULT INFORMATION ABOUT LOS CHANNEL,
OR SIGNAL GENERATED BASED ON
CHARACTERISTIC OF LOS CHANNEL

S1960

# FIG. 20

2010

BASE STATION

2020

USER EQUIPMENT

S2030

DETERMINE CHANNEL AS NLOS CHANNEL IN
AT LEAST ONE BAND FROM AMONG MULTIPLE
BANDS, BASED ON RANDOM ACCESS PREAMBLE

RECEIVE REFERENCE SIGNAL FOR MEASURING
CHANNEL IN EACH OF MULTIPLE BANDS

S2040

S2050

DETERMINE, BASED ON REFERENCE SIGNAL,
WHETHER CHANNEL IS LOS OR NLOS FOR
EACH OF MULTIPLE BANDS

S2060

IDENTIFY CHANNEL AS LOS CHANNEL WHEN
CHANNEL IS DETERMINED AS LOS IN EACH
OF MULTIPLE BANDS

TRANSMIT AT LEAST ONE OF IDENTIFICATION
RESULT INFORMATION ABOUT LOS CHANNEL,
OR SIGNAL GENERATED BASED ON
CHARACTERISTIC OF LOS CHANNEL

S2070

# FIG. 21

2110
BASE STATION

2120
USER EQUIPMENT

S2130
DETERMINE CHANNEL AS NLOS CHANNEL IN AT LEAST ONE BAND FROM AMONG MULTIPLE BANDS, BASED ON RANDOM ACCESS PREAMBLE

RECEIVE REFERENCE SIGNAL FOR MEASURING CHANNEL IN EACH OF MULTIPLE BANDS
S2140

S2150
DETERMINE, BASED ON REFERENCE SIGNAL, WHETHER CHANNEL IS LOS OR NLOS FOR EACH OF MULTIPLE BANDS

S2160
IDENTIFY CHANNEL AS LOS CHANNEL WHEN CHANNEL IS DETERMINED AS LOS IN EACH OF MULTIPLE BANDS

TRANSMIT AT LEAST ONE OF LOCATION INFORMATION OF USER EQUIPMENT, IDENTIFICATION RESULT INFORMATION ABOUT LOS CHANNEL, OR SIGNAL GENERATED BASED ON CHARACTERISTIC OF LOS CHANNEL
S2170

# FIG. 22

2200

# FIG. 23

2300

## INTERNATIONAL SEARCH REPORT

| International application No. |
|---|
| **PCT/KR2022/008542** |

| A. | CLASSIFICATION OF SUBJECT MATTER |
|---|---|

**H04B 17/309**(2014.01)i; **H04L 25/02**(2006.01)i; **H04L 5/00**(2006.01)i; **H04B 17/318**(2014.01)i; **H04B 17/364**(2014.01)i; **H04W 74/00**(2009.01)i

According to International Patent Classification (IPC) or to both national classification and IPC

| B. | FIELDS SEARCHED |
|---|---|

Minimum documentation searched (classification system followed by classification symbols)

H04B 17/309(2014.01); G01S 5/02(2010.01); H04B 17/10(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가시 경로(line-of-sight), 채널(channel), 참조 신호(reference signal), 다중 대역 (multi-band)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2020-229902 A1 (TELEFONAKTIEBOLAGET LM ERICSSON (PUBL)) 19 November 2020 (2020-11-19)<br>See paragraphs [0043] and [0081]-[0086]; claim 1; and figures 6-10. | 1,5,7-9,11-12,15 |
| A | | 2-4,6,10,13-14 |
| Y | DENG, Sijia et al. 28 GHz and 73 GHz Millimeter-Wave Indoor Propagation Measurements and Path Loss Models. arXiv:1509.00395v1. 01 September 2015, pp. 1-7.<br>[retrieved on 07 September 2022]. Retrieved from <URL: https://arxiv.org/pdf/1509.00395.pdf>.<br>See sections III-IV; and figures 1 and 6-7. | 1,5,7-9,11-12,15 |
| A | FAN, Wei et al. Measured wideband characteristics of indoor channels at centimetric and millimetric bands. EURASIP Journal on Wireless Communications and Networking. 20 February 2016, pp. 1-13.<br>See pages 5-6; and figure 2. | 1-15 |
| A | HU, Zhuomin et al. Channel Measurement for Multiple Frequency Bands in Subway Tunnel Scenario. International Journal of Antennas and Propagation. 03 June 2021, pp. 1-13.<br>See pages 2-4; and figure 3. | 1-15 |

| ✓ | Further documents are listed in the continuation of Box C. | ✓ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 September 2022** | **15 September 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2022/008542** |

**C.      DOCUMENTS CONSIDERED TO BE RELEVANT**

| Category* | Citation of document, with indication, where appropriate, of the relevant passages | Relevant to claim No. |
|---|---|---|
| A | KR 10-2021-0034270 A (SAMSUNG ELECTRONICS CO., LTD.) 30 March 2021 (2021-03-30)<br>See paragraphs [0083]-[0096]; claim 1; and figure 7. | 1-15 |

Form PCT/ISA/210 (second sheet) (July 2019)

**INTERNATIONAL SEARCH REPORT**
Information on patent family members

International application No.

**PCT/KR2022/008542**

| Patent document cited in search report | | | Publication date (day/month/year) | Patent family member(s) | | | Publication date (day/month/year) |
|---|---|---|---|---|---|---|---|
| WO | 2020-229902 | A1 | 19 November 2020 | None | | | |
| KR | 10-2021-0034270 | A | 30 March 2021 | EP | 4007927 | A1 | 08 June 2022 |
| | | | | US | 11375469 | B2 | 28 June 2022 |
| | | | | US | 2021-0092703 | A1 | 25 March 2021 |
| | | | | WO | 2021-054597 | A1 | 25 March 2021 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XIAO, ZHUOLING et al.** Non-line-of-sight identification and mitigation using received signal strength. *IEEE Transactions on Wireless Communications,* 2014, vol. 14 (3), 1689-1702

- 28 GHz and 73 GHz millimeter-wave indoor propagation measurements and path loss models. **DENG, SIJIA ; MATHEW K. SAMIMI ; THEODORE S.** 2015 IEEE International Conference on Communication Workshop (ICCW). IEEE, 2015